# EUROPEAN PATENT APPLICATION

(11) **EP 4 344 880 A1**
(43) Date of publication of application: **03.04.2024**
(21) Application number: 23200070.3
(22) Date of filing: 27.09.2023
(51) Int. Cl.: B41J 2/175, G06Q 10/087, G06F 3/12

(54) **ELECTRONIC DEVICE AND PROGRAM**

(30) Priority: 30.09.2022 JP 2022157632
(71) Applicant: BROTHER KOGYO KABUSHIKI KAISHA, Aichi-ken 467-8561 (JP)
(72) Inventor: HATTORI, Yuka, Nagoya, 467-8562 (JP); MORI, Tetsunori, Nagoya, 467-8562 (JP)
(74) Representative: Kuhnen & Wacker Patent- und Rechtsanwaltsbüro PartG mbB

(57) **Abstract**

In an electronic device, a controller performs: in response to a consumable being mounted, an acquisition process to acquire identification information from the mounted consumable; and when an agreement has been concluded for the electronic device and the mounted consumable satisfies a prescribed condition: a first storage process to store the acquired identification information as first identification information; and a permission process to permit a consumption process to consume the mounted consumable. The controller further performs: a reception process to receive identification information of a consumable mounted in another electronic device; and a second storage process to store the received identification information as second identification information. When an agreement has been concluded for the electronic device, the mounted consumable does not satisfy the prescribed condition, and the acquired identification information matches one of the first identification information and the second identification information, the controller performs the permission process.

## Description

The present invention relates to an electronic device, a program, a system, and a method.

In recent years, vendors of electronic devices, such as image-forming devices, have provided various services to users who enter an agreement with the vendor. For example, Japanese Patent Application Publication No. 2021-94705 describes an image-forming device provided with tanks storing ink, and sub-tanks that receive ink supplied from the tanks and supply this ink to a recording head. When special tanks are mounted in this image-forming device, for example, the sub-tanks are not replenished with ink from the tanks while the user has not entered a special agreement with the vendor but are allowed to be replenished with ink from the special tanks once the user has concluded a special agreement with the vendor.

However, even if the user has entered a special agreement for an image-forming device and is allowed to use the special tanks or other special consumables, the image-forming device may need to be replaced for some reason, such as the occurrence of a malfunction or the image-forming device reaching the end of its service life. When an image-forming device must be replaced in such a situation, requiring the user to enter a new agreement to use tanks on the new image-forming device would diminish user convenience. Additionally, special tanks that were being used on the malfunctioned image-forming device and still have life may need to be disposed of or recycled.

In view of the foregoing, it is an object of the present invention to provide a technology that enables subscription consumables used on an old electronic device to be transferred to and used on a new electronic device under a new agreement when replacing the old electronic device with the new electronic device due to the old electronic device malfunctioning or the like.
(1) In order to attain the above and other objects, according to one aspect, the present disclosure provides an electronic device. The electronic device includes: an accommodating portion; a main memory; a communication interface; and a controller. In the accommodating portion, a consumable is mountable. The consumable has a consumable memory storing identification information for identifying the consumable. The controller is configured to perform: in response to a consumable being mounted into the accommodating portion, an acquisition process; and after performing the acquisition process, when an agreement has been concluded for the electronic device and the mounted consumable currently mounted in the accommodating portion satisfies a prescribed condition: a first storage process; and a permission process. The acquisition process acquires identification information from a consumable memory of the mounted consumable currently mounted in the accommodating portion. The first storage process stores the acquired identification information acquired in the acquisition process in the main memory as first identification information. The permission process permits a consumption process. The consumption process performs a prescribed operation while consuming the mounted consumable. The controller is configured to further perform: a reception process; and a second storage process. The reception process receives identification information of a consumable that has been mounted in another electronic device via the communication interface. The second storage process stores the received identification information received in the reception process in the main memory as second identification information. After performing the acquisition process, when an agreement has been concluded for the electronic device, the mounted consumable currently mounted in the accommodating portion does not satisfy the prescribed condition, and the acquired identification information acquired in the acquisition process matches one of the first identification information and the second identification information stored in the main memory, the controller performs the permission process.
   The above configuration enables the electronic device to store identification information of a consumable that has been used on another electronic device in the main memory as second identification information, even though an agreement has been concluded for the electronic device. As a result, when identification information of a consumable previously used on another electronic device matches one of the first identification information and the second identification information, this consumable can continue to be used on the electronic device, even though an agreement has been concluded for the electronic device.
(2) In the electronic device according to aspect (1), it is preferable that the controller is configured to further perform: after performing the reception process, a first determination process. The first determination process determines whether a write permission has been received via the communication interface. The write permission permits storing of the received identification information received in the reception process in the main memory. It is also preferable that when the controller determines in the first determination process that the write permission has been received, the controller performs the second storage process, whereas when the controller determines in the first determination process that the write permission has not been received, the controller skips the second storage process.
   With the above configuration, the electronic device can avoid incorrectly storing identification information of an unintended consumable in the main memory.
(3) In the electronic device according to aspect (1), it is preferable that the controller is configured to further perform: after performing the acquisition process, when the mounted consumable currently mounted in the accommodating portion satisfies the prescribed condition, a preparatory process. The preparatory process prepares for performing the consumption process. It is also preferable that after performing the acquisition process, when the mounted consumable currently mounted in the accommodating portion does not satisfy the prescribed condition, the controller skips the preparatory process.
   With the above configuration, the electronic device can avoid incorrectly storing identification information of an unintended consumable in the main memory.
(4) In the electronic device according to aspect (3), it is preferable that the consumable includes a cartridge. The cartridge stores liquid therein. It is also preferable that the electronic device further includes: a liquid ejection head. The nozzle is configured to eject the liquid stored in the cartridge. It is also preferable that the preparatory process includes an initial introduction process. The initial introduction process fills the liquid ejection head with the liquid in the cartridge.
   Accordingly, the user may be required to mount a cartridge that satisfies the prescribed condition (e.g., being a new special cartridge) into the accommodating portion when the initial introduction of liquid into the liquid ejection head has not been completed. , the user may be required to mount a cartridge that satisfies the prescribed condition (e.g., being a new special cartridge) into the accommodating portion. This allows the user, when the initial introduction of liquid into the liquid ejection head has not been completed, to mount a cartridge that satisfies the prescribed condition into the accommodating portion without hesitation even if a cartridge that has been used on another electronic device is still available to the user.
(5) According to another aspect, the present disclosure provides an electronic device. The electronic device includes: an accommodating portion; a main memory; a communication interface; and a controller. In the accommodating portion, a consumable is mountable. The consumable has a consumable memory storing identification information for identifying the consumable. The controller is configured to perform: in response to a consumable being mounted into the accommodating portion, an acquisition process; and after performing the acquisition process, when an agreement has been concluded for the electronic device and the mounted consumable currently mounted in the accommodating portion satisfies a prescribed condition, a storage process. The acquisition process acquires identification information from a consumable memory of the mounted consumable currently mounted in the accommodating portion. The storage process stores the acquired identification information acquired in the acquisition process in the main memory. The controller is configured to further perform: a first determination process; and a transmission process. The first determination process determines whether a request to use the mounted consumable in another electronic device has been received via the communication interface. The transmission process is performed in response to determining in the first determination process that the request has been received. The transmission process transmits the identification information stored in the main memory to an external device.
   The above configuration enables the electronic device to transmit via its communication interface identification information of a consumable mounted in the accommodating portion of the electronic device to another electronic device on which the user intends to use this consumable. As a result, the other electronic device can receive the identification information for this consumable via its communication interface and store the received identification information in its main memory, enabling the other electronic device to use (consume) this consumable thereon.
(6) Preferably, the electronic device according to aspect (5) further includes: a display; and a user interface. It is preferable that the controller is configured to further perform: in response to determining in the first determination process that the request has been received; a display process; and a second determination process. The display process displays on the display an inquiry screen inquiring whether to respond to the request. The second determination process determines whether an instruction to respond to the request has been received via the user interface.
   The above configuration enables the electronic device to transmit identification information of a consumable mounted in the accommodating portion of the electronic device to an external device after obtaining the approval of the user of the electronic device. Thus, the consumable used on the electronic device can continue to be used on another electronic device with the approval of the user of the electronic device.
(7) In the electronic device according to aspect (5) or (6), it is preferable that the controller is configured to further perform: a third determination process; and a setting process. The third determination process determines whether the transmission process has been performed. The setting process is performed in response to determining in the third determination process that the transmission process has been performed. The setting process sets the main memory to prohibit writing and reading of the identification information of the consumable.
   The above configuration prevents identification information stored in the main memory from being changed or leaked to external devices. As a result, consumables that can be used on other electronic devices can be limited.
(8) According to still another aspect, the present disclosure provides a program for controlling a server. The server includes: a server-side communication interface; and a computer. The server is communicable with a first electronic device and a second electronic device via the server-side communication interface. Each of the first electronic device and the second electronic device is configured to perform a prescribed operation while consuming a consumable under an agreement concluded for the each of the first electronic device and the second electronic device. The consumable satisfies a prescribed condition. The consumable has a consumable memory storing identification information for identifying the consumable. The first electronic device includes a first main memory. The second electronic device includes a second main memory. The program, when executed by the computer, causes the server to perform: (a) acquiring; and (b) transmitting. The acquiring in (a) acquires identification information of a mounted consumable from the first main memory via the server-side communication interface. The mounted consumable is a consumable currently mounted in the first electronic device. The transmitting in (b) transmits notification information to the second electronic device via the server-side communication interface. The notification information notifies the second electronic device of the acquired identification information acquired in (a) as identification information of an available consumable that can be consumed in the second electronic device.
   The above configuration allows a consumable that has been used on the first electronic device to be mounted in the second electronic device and continue to be used on the second electronic device.
(9) For the program according to aspect (8), it is preferable that the notification information includes instruction information instructing the second electronic device to store the acquired identification information acquired in (a) in the second main memory as the identification information of the available consumable.
   The above configuration allows a consumable that has been used on the first electronic device to be set as a consumable that can be mounted in and continue to be used on the second electronic device.
(10) For the program according to aspect (8) or (9), it is preferable that the server is communicable with a user terminal via the server-side communication interface. The user terminal is used by a user of the first electronic device. It is also preferable that the program, when executed by the computer, causes the server to further perform: prior to performing the acquiring in (a): (c) transmitting; and (d) determining. The transmitting in (c) transmits inquiry information to one of the first electronic device and the user terminal via the server-side communication interface. The inquiry information inquires whether the mounted consumable currently mounted in the first electronic device is to be used in the second electronic device. The determining in (d) determines whether response information to the inquiry information transmitted in (c) has been received via the server-side communication interface. The response information indicates that the mounted consumable is to be used in the second electronic device. It is also preferable that the acquiring in (a) is performed when the determining in (d) determines that the response information has been received.
   The above configuration allows a consumable that has been used on the first electronic device to continue to be used on the second electronic device after obtaining the approval from the user of the first electronic device to use this consumable on the second electronic device.
(11) For the program according to aspect (8) or (9), it is preferable that the consumable memory of the consumable is configured to store residual quantity information indicating residual quantity of the consumable. It is also preferable that the program, when executed by the computer, causes the server to further perform: prior to performing the acquiring in (a): (e) acquiring; and (f) determining. The acquiring in (e) acquires residual quantity information of the mounted consumable currently mounted in the first electronic device from the first electronic device via the server-side communication interface. The determining in (f) determines whether residual quantity indicated by the acquired residual quantity information acquired in (e) is greater than or equal to a threshold. It is also preferable that the acquiring in (a) is performed when the determining in (f) determines that the residual quantity is greater than or equal to the threshold.
   The above configuration allows a consumable currently mounted in and used on the first electronic device to be subsequently mounted in the second electronic device and continue to be used on the second electronic device when the residual quantity of consumable material in the consumable is greater than or equal to a threshold, e.g., the quantity of liquid required for the initial introduction into the liquid ejection head.
(12) For the program according to aspect (11), it is preferable that the second electronic device further includes: an accommodating portion; a device-side communication interface; and a controller. In the accommodating portion, the consumable is mountable. The second electronic device is communicable with the server via the device-side communication interface. It is also preferable that the controller of the second electronic device is configured to perform: when the mounted consumable currently mounted in the accommodating portion satisfies the prescribed condition, a preparatory process; and when the preparatory process is completed, a transmission process. The preparatory process prepares for performing a consumption process to perform the prescribed operation while consuming the mounted consumable. The transmission process transmits a preparation complete notification to the server via the device-side communication interface. The preparation complete notification indicates the preparatory process has been completed. It is also preferable that the program, when executed by the computer, causes the server to further perform: in response to determining in (f) that the residual quantity is less than the threshold, (g) determining. The determining in (g) determines whether the preparation complete notification has been received from the second electronic device via the server-side communication interface. It is also preferable that the transmitting in (b) is performed after the determining in (v) determines that the preparation complete notification has been received.
   The above configuration allows the user of the second electronic device to be guided to mount a consumable that satisfies the prescribed condition (e.g., being a new special consumable) into the accommodating portion of the second electronic device in order to complete the preparatory process to prepare for performing the consumption process to perform the prescribed operation while consuming the consumable mounted in the accommodating portion. After the preparatory process is completed, the user can continue to use a consumable that has been used on the first electronic device on the second electronic device by mounting this consumable into the accommodating portion of the second electronic device.
(13) For the program according to aspect (8) or (9), it is preferable that the program, when executed by the computer, causes the server to further perform: prior to performing the acquiring in (a): (h) acquiring; and (i) determining. The acquiring in (h) acquires a status of the second electronic device via the server-side communication interface. The determining in (i) determines whether the acquired status of the second electronic device acquired in (h) is a prescribed status. It is also preferable that the acquiring in (a) is performed when the determining in (i) determines that the acquired states of the second electronic device is the prescribed status.
   With the above configuration, the server transmits identification information of a consumable that is currently mounted in the first electronic device to the second electronic device when the second electronic device reaches the prescribed status. This allows the consumable that has been used on the first electronic device to be mounted in and continue to be used on the second electronic device after the second electronic device has reached the prescribed status.
(14) For the program according to aspect (13), it is preferable that the second electronic device includes an accommodating portion. In the accommodating portion, the consumable is mountable. It is also preferable that the prescribed status includes a status in which a preparatory process to prepare for performing a consumption process to perform the prescribed operation while consuming the mounted consumable currently mounted in the accommodating portion has been completed.
   With the above configuration, the server transmits identification information of a consumable that is currently mounted in the first electronic device to the second electronic device after the second electronic device has reached a status in which the preparatory process to prepare for performing the consumption process to perform the prescribed operation while consuming the mounted consumable is complete. This allows the user of the second electronic device to be guided to mount a consumable that satisfies the prescribed condition (e.g., being a new special consumable) into the accommodating portion of the second electronic device in order to complete the preparatory process to prepare for performing the consumption process to perform the prescribed operation while consuming the consumable mounted in the second electronic device. This also allows a consumable that has been used on the first electronic device to be mounted in and continue to be used on the second electronic device after the second electronic device has reached the status in which the preparatory process to prepare for performing the consumption process to perform the prescribed operation while consuming the mounted consumable is complete.
(15) For the program according to aspect (13), it is preferable that the consumable memory of the consumable is configured to store residual quantity information indicating residual quantity of the consumable. It is also preferable that the second electronic device further includes: an accommodating portion in which the consumable is mountable. It is also preferable that the prescribed status includes a status in which the residual quantity of the mounted consumable currently mounted in the accommodating portion and satisfying the prescribed condition is less than or equal to a prescribed quantity.
   With the above configuration, the server transmits identification information of a consumable that is currently mounted in the first electronic device to the second electronic device after the second electronic device has reached a status in which the residual quantity of a consumable that is currently mounted in the second electronic device and satisfies the prescribed condition (e.g., being a new special consumable) is less than or equal to a prescribed quantity. This allows the user of the second electronic device to be guided to mount a consumable that satisfies the prescribed condition (e.g., being a new special consumable) into the accommodating portion of the second electronic device. This also allows the user of the second electronic device to continue to use a consumable that has been used on the first electronic device on the second electronic device after the second electronic device has reached the status in which the residual quantity of a consumable that is currently mounted in the second electronic device and satisfies the prescribed condition is less than or equal to the prescribed quantity.
(16) For the program according to aspect (8) or (9), it is preferable that the consumable memory of the consumable is configured to store residual quantity information indicating residual quantity of the consumable. It is also preferable that the second electronic device further includes: an accommodating portion; a device-side communication interface; and a controller. In the accommodating portion, the consumable is mountable. The second electronic device is communicable with the server via the device-side communication interface. It is also preferable that the controller of the second electronic device is configured to perform: when the mounted consumable currently mounted in the accommodating portion satisfies the prescribed condition, a preparatory process; and at a predetermined timing after the preparatory process is complete, a transmission process. The preparatory process prepares for performing a consumption process to perform the prescribed operation while consuming the mounted consumable. The transmission process transmits a residual quantity notification to the server via the device-side communication interface. The residual quantity information indicates residual quantity of the mounted consumable currently mounted in the accommodating portion. It is also preferable that the program, when executed by the computer, causes the server to further perform: prior to performing the transmitting in (b), (j) determining. The determining in (j) determines whether the residual quantity notification is received from the second electronic device via the server-side communication interface. It is also preferable that the transmitting in (b) is performed after the determining in (j) determines that the residual quantity notification is received from the second electronic device.
   With the above configuration, the server transmits identification information of a consumable that is currently mounted in the first electronic device to the second electronic device after receiving the residual quantity notification indicating residual quantity (e.g., EMPTY) of a consumable that is currently mounted in the second electronic device and satisfies the prescribed condition (e.g., being a new special consumable) from the second electronic device. This allows the user of the second electronic device to be guided to firstly mount a consumable that satisfies the prescribed condition (e.g., being a new special consumable) into the accommodating portion of the second electronic device. This also allows the user of the second electronic device to continue to use a consumable that has been used on the first electronic device on the second electronic device.
(17) According to still another aspect, the present disclosure also provides a system. The system includes: a first electronic device; a second electronic device; and a server. The first electronic device is configured to perform a prescribed operation while consuming a consumable satisfying a prescribed condition under an agreement concluded for the first electronic device. The first electronic device includes: a first main memory. The second electronic device is configured to perform the prescribed operation while consuming the consumable satisfying the prescribed condition under the agreement newly concluded for the second electronic device. The second electronic device includes: a second main memory. The server is communicable with the first electronic device and the second electronic device over a communication network. The consumable has a consumable memory storing identification information for identifying the consumable. The server is configured to perform: (a) acquiring; and (b) transmitting. The acquiring in (a) acquires identification information of a mounted consumable from the first main memory via the communication network. The mounted consumable is a consumable currently mounted in the first electronic device. The transmitting in (b) transmits notification information to the second electronic device via the communication network. The notification information notifies the second electronic device of the acquired identification information acquired in (a) as identification information of an available consumable that can be consumed in the second electronic device.
   The above configuration allows a consumable that has been used on the first electronic device to be mounted in the second electronic device and continue to be used on the second electronic device.
(18) According to still another aspect, the present disclosure also provides a method for controlling a server. The server includes: a server-side communication interface. The server is communicable with a first electronic device and a second electronic device via the server-side communication interface. Each of the first electronic device and the second electronic device is configured to perform a prescribed operation while consuming a consumable satisfying a prescribed condition under an agreement concluded for the each of the first electronic device and the second electronic device. The consumable having a consumable memory storing identification information for identifying the consumable. The first electronic device includes a first main memory. The second electronic device includes a second main memory. The method includes: (a) acquiring; and (b) transmitting. The acquiring in (a) acquires identification information of a mounted consumable from the first main memory via the server-side communication interface. The mounted consumable is a consumable currently mounted in the first electronic device. The transmitting in (b) transmits notification information to the second electronic device via the server-side communication interface. The notification information notifies the second electronic device of the acquired identification information acquired in (a) as identification information of an available consumable that can be consumed in the second electronic device.

The above configuration allows a consumable previously used on the first electronic device to be mounted in the second electronic device and continue to be used on the second electronic device.

According to the electronic device, program, system, and method with the above configuration, subscription consumables used on an ole electronic device to be transferred to and used on a new electronic device under a new agreement when the old electronic device is replaced with the new electronic device due to the old electronic device malfunctioning or the like.
FIG. 1 is an explanatory diagram illustrating an overview of an image formation system.
FIG. 2 is a schematic diagram illustrating a structure of an image-forming device.
FIG. 3 is a block diagram illustrating the primary configuration of the image-forming device, an ink cartridge, and a server.
FIG. 4 is an explanatory diagram illustrating a data structure of a cartridge memory.
FIG. 5 is a sequence diagram illustrating an example of operations performed by the various devices in the image formation system when an old printer is being replaced with a new printer.
FIG. 6 is a flowchart illustrating an example of steps in a process executed on the server when an old printer is being replaced with a new printer.
FIG. 7 is a flowchart illustrating an example of steps in a process executed on a service provider's terminal at a factory when an old printer is being replaced with a new printer.
FIG. 8 is a flowchart illustrating an example of steps in a process executed on an old printer when the old printer is being replaced with a new printer.
FIG. 9 is a flowchart illustrating an example of a process executed on a new printer when an old printer is being replaced with the new printer.
FIG. 10 is a flowchart illustrating another example of a partial flow of a process executed on the server when an old printer is being replaced with a new printer.
FIG. 11 is a flowchart illustrating still another example of a partial flow of a process executed on the server when an old printer is being replaced with a new printer.

### [Embodiment]

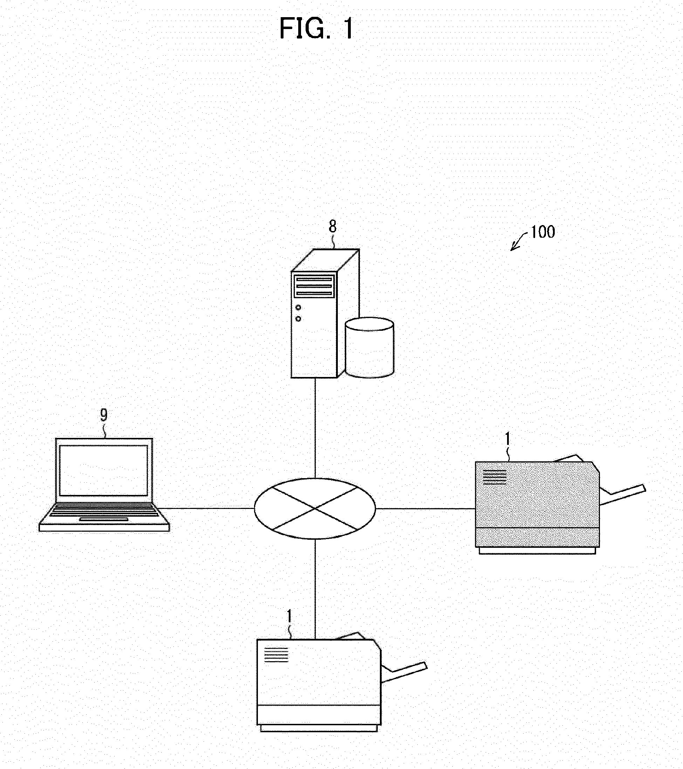

Hereinafter, one embodiment of the present disclosure will be described while referring to FIGS. 1 through 9. In the present embodiment, a case is described where image-forming devices 1 as examples of the electronic devices are inkjet printers. However, the image-forming devices 1 may be printers other than the inkjet printers. For example, the image-forming devices 1 may be laser printers.

### < Overview of Image Formation System >

FIG. 1 is a diagram illustrating an overview of an image formation system 100 according to the present embodiment. As illustrated in FIG. 1, the image formation system 100 includes a plurality of image-forming devices 1, a server 8, and a user terminal 9. According to agreements concluded between a single user and a service provider, the plurality of image-forming devices 1 illustrated in FIG. 1 is supplied to the user by the service provider. However, although not illustrated in the drawings, the image formation system 100 may further include other image-forming devices purchased by the user.

Each image-forming device 1 is a device for implementing a service provided on the basis of an agreement concluded for the image-forming device 1. The server 8 is an external device that communicates with the image-forming devices 1 via a network and serves as an example of a management device for managing the image-forming devices 1. In the present embodiment, the server 8 is a server managed by the service provider.

The "agreement" in the present embodiment denotes a contract concluded between a user and a service provider under which the service provider provides the user with a specific service via an image-forming device 1 designated by the user or an image-forming device 1 that the service provider has provided the user. In other words, the user concludes an agreement for a certain image-forming device 1. Also, the image-forming device 1 can be considered as a device subjected to an agreement. Hereinafter, the image-forming device 1 designated by the user as the subject of an agreement or the image-forming device 1 that the service provider has provided the user as the subject of an agreement will be referred to as "subscribed machine".

Each of the image-forming devices 1 is supplied by the service provider to the user once the user enters an agreement with the service provider and can be used, for example, at a fixed monthly rate. Further, with an agreement concluded between the user and the service provider, each image-forming device 1 can use special subscription-based consumables, for example, at a fixed monthly rate. In an example of the agreement, the service provider providing the subscription service and the user agree on a usage period, a usage fee, and the like of the service, and both parties agree that the service provider will provide this service with the user.

In other words, once an agreement for the service is concluded, the image-forming device 1 in the present embodiment can perform subscription printing, which is printing using special subscription-based consumables under the details of the concluded agreement. Alternatively, the image-forming device 1 may be a device that, once an agreement for the service is concluded, can be used under the details of the concluded agreement and can perform subscription printing which is printing using special subscription-based consumables.

The user can register or change the image-forming device 1 serving as the subscribed machine at any time. Here, the term "register" may indicate registering a new image-forming device 1 or re-registering an image-forming device 1 which was previously registered but for which the agreement has been cancelled. The user can also register a plurality of image-forming devices 1 as subscribed machines. In other words, the user can use a plurality of image-forming devices 1 simultaneously as subscribed machines, and can change the image-forming device 1 targeted as the subscribed machine from one image-forming device 1 to another image-forming device 1. Furthermore, when the image-forming device 1 serving as the subscribed machine malfunctions or otherwise failed, the service provider sends a new image-forming device 1 registered as a replacement subscribed machine to the user so that the user can replace the failed image-forming device 1 with the new image-forming device 1.

The user terminal 9 used by the user is a device that communicates with the server 8 in order to conclude and cancel an agreement and to perform other procedures. An information processing terminal equipped with standard communication functions, such as a personal computer (PC) or a smartphone, can be employed as the user terminal 9. The user may also transmit a print instruction to the image-forming device 1 through the user terminal 9 to print a desired number of sheets using the special subscription-based consumables. The devices configuring the image formation system 100 can communicate with one another over a communication network such as the Internet.

### < Overall Structure of the Image-Forming Device 1 >

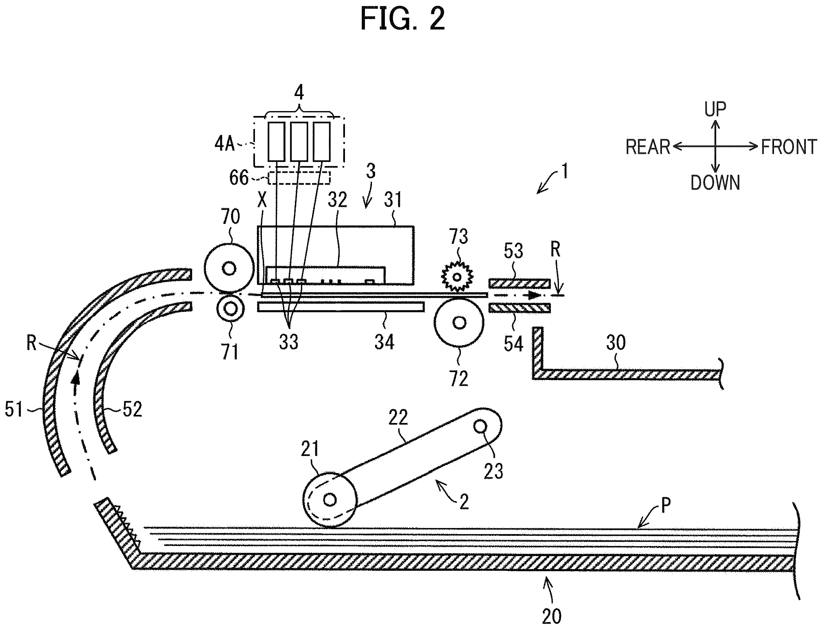

FIG. 2 illustrates the schematic configuration of the image-forming device 1 according to the present embodiment. For convenience, the following description will refer to the upper side in FIG. 2 as the upper side of the image-forming device 1, the lower side in FIG. 2 as the lower side of the image-forming device 1, the left side in FIG. 2 as the rear side of the image-forming device 1, and the right side in FIG. 2 as the front side of the image-forming device 1.

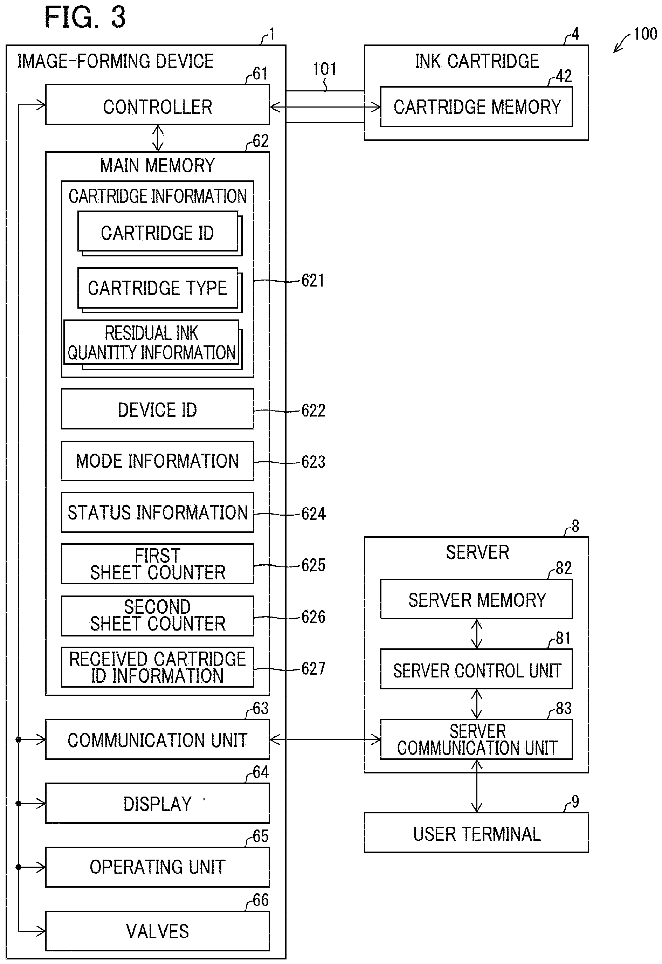

The image-forming device 1 is an inkjet printer that prints an image represented by data on a printing sheet P by ejecting ink. One or more ink cartridges are mounted in the main casing of the image-forming device 1. In addition to the members illustrated in FIG. 2, the image-forming device 1 is also provided with a display 64 and an operating unit 65, as illustrated in FIG. 3. The display 64 and operating unit 65 will be described later.

In the example of FIG. 2, the image-forming device 1 is provided with a paper tray 20, a sheet-feeding unit 2, a conveying roller 70, a recording unit 3, a discharge roller 72, and a discharge tray 30. The image-forming device 1 is formed with an opening in the front side thereof. The paper tray 20 is disposed in the opening and can be moved in the front-rear direction. The paper tray 20 accommodates a plurality of printing sheets P stacked therein. The printing sheets P are paper of a prescribed size, for example. The printing sheets P are not limited to a paper medium. For example, the printing sheets P may be formed of a resin material, such as transparency sheets.

The sheet-feeding unit 2 has a feed roller 21, a feed arm 22, and a shaft 23. Through forward rotation of the feed roller 21, the sheet-feeding unit 2 feeds a printing sheet P accommodated in the paper tray 20 onto a conveying path R. The feed roller 21 is rotatably provided on the distal end of the feed arm 22. The feed arm 22 is pivotably provided on the shaft 23, which is supported in a frame of the image-forming device 1. The feed arm 22 is urged to rotate toward the paper tray 20 by its own weight or the elastic force of a spring or the like. The image-forming device 1 is provided with a motor (not illustrated). When the motor rotates in a reverse direction, a drive force from the motor is transmitted to the feed roller 21, causing the feed roller 21 to rotate in a forward direction.

The conveying path R is a space formed by a guide member 51, a guide member 52, the recording unit 3, a guide member 53, a guide member 54, and the like. The printing sheets P are conveyed one by one in a conveying direction on the conveying path R, as described later.

The conveying roller 70 is disposed upstream of the recording unit 3 in the conveying direction of the printing sheets P. The image-forming device 1 includes a pinch roller 71 arranged to oppose the bottom portion of the conveying roller 70. The conveying roller 70 is rotated by the drive force of a motor (not illustrated) possessed by the image-forming device 1. The pinch roller 71 rotates along with the rotation of the conveying roller 70. While pinched between the conveying roller 70 and pinch roller 71, a printing sheet P is conveyed to an image-recording position X on the conveying path R by the forward rotation of the conveying roller 70 and pinch roller 71.

The image-recording position X is the position at which a recording head 32 of the recording unit 3 records images on the printing sheet P. When the motor in the image-forming device 1 rotates forward, the drive force from the motor is transmitted to the conveying roller 70, causing the conveying roller 70 to rotate forward. When the motor rotates in reverse, the drive force of the motor is transmitted to the conveying roller 70, causing the conveying roller 70 to rotate in reverse.

The recording unit 3 is disposed along the conveying path R between the conveying roller 70 and the discharge roller 72. The recording unit 3 has a carriage 31, the recording head 32, a plurality of nozzles 33, and a platen 34. The nozzles 33 are further connected to ink cartridges 4 described later in greater detail. The ink cartridges 4 are accommodated in a cartridge housing unit 4A. Note that there is no particular restriction on the numbers of nozzles 33 and ink cartridges 4. The cartridge housing unit 4A is an example of the accommodating portion of the present invention. The ink cartridges 4 are examples of the cartridge of the present invention. The recording head 32 is an example of the liquid ejection head of the present invention.

Each ink cartridge 4 has a cartridge case. The cartridge case can be mounted in the main casing of the image-forming device 1. The ink cartridges 4 accommodate ink in mutually different colors (one of the colors cyan, magenta, yellow, and black, for example) as the material used for image formation. The ink is a consumable that is consumed during each printing operation.

The carriage 31 reciprocates in directions orthogonal to the conveying direction, i.e., along the width direction of the printing sheet P. During image recording on a printing sheet P, the image-forming device 1 performs a recording process and a line feed process. In the recording process, the image-forming device 1 records one line worth of an image on the printing sheet P by moving the carriage 31 in the width direction of the printing sheet P and simultaneously ejecting ink from the nozzles 33 in the recording head 32 while conveyance of the printing sheet P is in a halted state. In the line feed process, the image-forming device 1 drives the conveying roller 70 and discharge roller 72 to convey the printing sheet P a prescribed line feed amount. The image-forming device 1 repeatedly performs these recording and line feed processes.

The ink cartridges 4 are connected to the recording head 32 by tubes through which ink is supplied. Each tube is provided with a valve 66 mounted thereon. The valves 66 are closed when the image-forming device 1 is shipped from the factory to restrict ink from being transferred from the ink cartridges 4 to the recording head 32. The valves 66 are later opened through the control of a controller 61 in the image-forming device 1 (see FIG. 3) to allow ink in the ink cartridges 4 to be transferred to the recording head 32.

As illustrated in FIG. 2, the recording head 32 is supported in the carriage 31. The nozzles 33 are provided in the bottom surface of the recording head 32. The recording head 32 ejects ink droplets from the nozzles 33. The platen 34 is a rectangular plate-shaped member that supports the printing sheet P. While the carriage 31 is moving, the recording head 32 selectively ejects ink droplets toward the printing sheet P supported on the platen 34 to record an image on the printing sheet P.

The discharge roller 72 is disposed downstream of the recording unit 3 in the conveying direction. The image-forming device 1 also includes spurs 73 disposed in a position for opposing the top portion of the discharge roller 72. The discharge roller 72 is driven by a motor provided in the image-forming device 1. The spurs 73 rotate along with the rotation of the discharge roller 72. A printing sheet P pinched between the discharge roller 72 and spurs 73 is discharged into the discharge tray 30 by the forward rotation of the discharge roller 72 and spurs 73.

The discharge tray 30 is disposed above the paper tray 20. The discharge tray 30 supports printing sheets P discharged by the discharge roller 72.

### < Internal Structures of the Image-Forming Device 1, Ink Cartridge 4, and Server 8 >

Next, the internal structures of the image-forming device 1, ink cartridge 4, and server 8 will be described with reference to FIG. 3. FIG. 3 is a block diagram illustrating the primary configuration of the image-forming device 1, ink cartridge 4, and server 8 in the present embodiment.

### < Ink Cartridges 4 >

Each of the ink cartridges 4 has a cartridge memory 42 (consumable memory). The cartridge memory 42 is memory that allows the reading and writing of information. The cartridge memory 42 is flash read-only memory (flash ROM) or electrically erasable programmable ROM (EEPROM), for example. "EEPROM" is a registered Japanese trademark of Renesas Electronics Corporation.

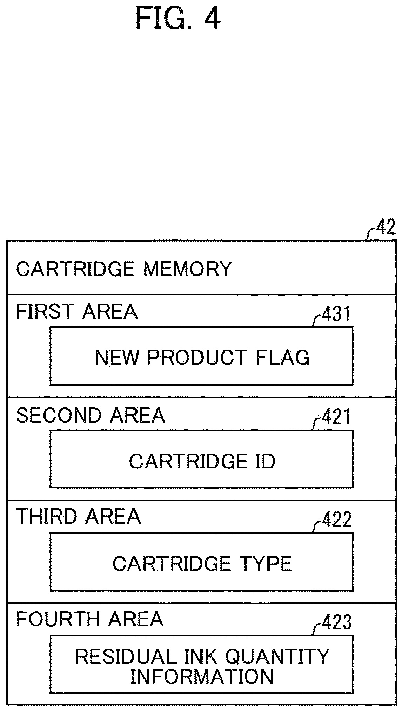

The cartridge memory 42 has one or more storage areas for storing information related to the ink cartridge 4. For example, the cartridge memory 42 has first through fourth areas. The data structure of the cartridge memory 42 will be described in greater detail with reference to FIG. 4.

The main casing of the image-forming device 1 has connectors 101. When an ink cartridge 4 is mounted in the main casing of the image-forming device 1, the corresponding connector 101 is electrically connected to the cartridge memory 42. Through this connection, a controller 61 in the image-forming device 1 can communicate with the cartridge memory 42 in the ink cartridge 4.

### < Image-Forming Device 1 >

The image-forming device 1 has a controller 61, a main memory 62, a communication unit 63, a display 64, an operating unit 65, and the valves 66. The controller 61 has an application-specific integrated circuit (ASIC), for example. The controller 61 is electrically connected to the main memory 62, communication unit 63, display 64, operating unit 65, and valves 66 provided inside the main casing of the image-forming device 1. By executing various operations, the controller 61 can perform various printing-related processes on the image-forming device 1. The communication unit 63 is an example of the communication interface and the device-side communication interface of the present invention.

The controller 61 may also be provided with a central processing unit (CPU) or another processor. In this case, a control program for implementing the control method of the image-forming device 1 may be saved in the main memory 62, and the controller 61 may control the image-forming device 1 to perform various processes by using the processor to perform operations according to the control program.

The controller 61 may also be provided with a computer-readable storage medium, such as the main memory 62, that stores the control program therein. Here, the storage medium may be a "non-transitory, tangible medium," such as ROM, a tape, a disc, a card, semiconductor memory, or a programmable logic circuit. Random-access memory (RAM) may also be used for developing the control program. The control program may also be supplied to the computer described above via any transmission medium (a communication network, broadcast waves, etc.) capable of transmitting the control program. Note that one aspect of the present disclosure is that the control program can be implemented in the form of data signals embedded in a carrier wave, as embodied in electronic transmission.

When an ink cartridge 4 is mounted in the image-forming device 1, the ink cartridge 4 is electrically connected to the controller 61 via a connector 101, as illustrated in FIG. 3. Consequently, the controller 61 can execute a read process to read information from the cartridge memory 42 and a write process (including a rewrite process) to write information to the cartridge memory 42.

The main memory 62 allows the reading and writing of information. The main memory 62 is flash ROM or EEPROM (registered Japanese trademark of Renesas Electronics Corporation), for example. The main memory 62 has one or more storage areas that store therein various information, such as that described in the following example.

Cartridge information 621 is information related to the ink cartridge 4 of each color mounted in the image-forming device 1. Specifically, for each ink cartridge 4 the cartridge information 621 includes information related to that ink cartridge 4 read from the corresponding cartridge memory 42. As an example, information related to the ink cartridge 4 may be a cartridge ID, a cartridge type, residual ink quantity information, and the like, as illustrated in the drawings. The data structure of the cartridge information 621, which corresponds to the information stored in the cartridge memory 42, will be described in greater detail with reference to FIG. 4.

The controller 61 may reference the cartridge information 621 in the present embodiment in order to determine whether to switch to the subscription mode on the basis of the mounted status of ink cartridges 4 in the image-forming device 1. The subscription mode is one of the operating modes of the image-forming device 1. In this operating mode, the image-forming device 1 is recognized as a subscribed machine on the image formation system 100 that is eligible to execute subscription printing in accordance with an agreement.

A device ID 622 is information for identifying the image-forming device 1. The device ID 622 is the serial number of the image-forming device, for example.

Mode information 623 is information specifying the operating mode of the image-forming device 1. For example, the two modes "subscription mode" and "non-subscription mode" are defined as operating modes in the present embodiment. The "subscription mode" signifies that the image-forming device 1 operates as a subscribed machine covered under an agreement on the image formation system 100. The non-subscription mode signifies that the image-forming device 1 is not a subscribed machine but operates as a normal image-forming device not covered under an agreement.

When the image-forming device 1 is shipped, the main memory 62 stores default mode information 623 specifying a value that corresponds to the non-subscription mode. The server 8 transmits a request to the image-forming device 1 belonging to a user that has entered an agreement. The request includes a subscription transition command instructing the image-forming device 1 to switch to the subscription mode. In accordance with the request received from the server 8, the controller 61 changes the value of the mode information 623 from the non-subscription mode to the subscription mode. The action of the controller 61 changing the value of the mode information 623 from the non-subscription mode to the subscription mode is called "transitioning to the subscription mode" in the example of the present embodiment.

Status information 624 represents the status of the image-forming device 1. For example, the status information 624 in the present embodiment may include an abnormality flag indicating whether the image-forming device 1 is normal or abnormal, and error information specifying details of the abnormality when the image-forming device 1 is abnormal. By referencing the status information 624, the controller 61 can determine whether the image-forming device 1 has malfunctioned and needs to be replaced with another image-forming device 1.

A first sheet counter 625 indicates the cumulative number of sheets printed on the image-forming device 1. A second sheet counter 626 specifies the number of sheets of printed matter that have been printed on the image-forming device 1 using the subscription service, i.e., the number of sheets of printed matter that have been printed on the image-forming device 1 in subscription printing. The count of the second sheet counter 626 may be reset to zero each time the image-forming device 1 transitions from the subscription mode to the non-subscription mode or may be the cumulative value of sheets of printed matter that have been printed on the image-forming device 1 to date in subscription printing. Unless otherwise specified, the value of the second sheet counter 626 hereafter will be the cumulative number of sheets printed to date in subscription printing.

The communication unit 63 conducts communication between the image-forming device 1 and server 8 over a communication network such as the Internet. The communication unit 63 outputs a request received from the server 8 to the controller 61. Here, a "request" denotes one of various requests, instructions, commands, queries, and the like transmitted from the server 8 in subscription-related processes. The controller 61 performs calculations and outputs results in response to the above request, and the communication unit 63 returns the results to the server 8 as a "response." The action of the communication unit 63 returning a response may be omitted in the present embodiment. For example, when the request is a command to modify various settings on the image-forming device 1, the controller 61 may modify the various settings on the image-forming device 1 in accordance with the command. However, the action of returning a notification to the server 8 via the communication unit 63 indicating that the settings have been modified may be omitted.

Received cartridge ID information 627 includes cartridge IDs for ink cartridges 4 mounted in another image-forming device 1, which information has been received from the server 8 via the communication unit 63. As will be described later, when special ink cartridges 4 that are not new are mounted in the image-forming device 1, the controller 61 permits the use of these ink cartridges 4 in subscription printing, provided that the cartridge IDs for the ink cartridges 4 are included in the cartridge information 621 or the received cartridge ID information 627.

The display 64 is configured of a liquid crystal display, an organic light emitting display (OLED), or the like. The controller 61 displays various information on the display 64, such as a "YES" button and a "NO" button. The operating unit 65 includes a touchscreen and the like integrally configured with the display 64. The operating unit 65 may include a plurality of physical pushbutton switches. The operating unit 65 may also comprise a combination of a touchscreen and physical pushbutton switches. By operating the operating unit 65, the user can input various instructions to be executed by the controller 61.

The controller 61 also controls the valves 66 to open and close. By transmitting a control signal to each valve 66, the controller 61 opens the valve 66, allowing ink to transfer from the corresponding ink cartridge 4 into the recording head 32.

### < User Terminal 9 >

The user terminal 9 has an input interface for receiving various input operations performed by the user, and a communication interface for communicating with the server 8. The user registers a subscribed machine on the server 8 by performing input operations on the user terminal 9. For example, the user inputs the user's own identification information and identification information for the image-forming device 1 that the user wishes to use as a subscribed machine into the user terminal 9. Upon receiving this input, the user terminal 9 transmits the inputted information to the server 8 via the communication interface.

In addition to input operations for registering a subscribed machine (i.e., for adding a subscribed machine), the user terminal 9 may receive input operations for changing the subscribed machine. For example, the user terminal 9 may receive input operations performed by the user to input the user's own identification information, identification information for the subscribed machine, and a replacement request to replace this subscribed machine due to a malfunction or the like. The user terminal 9 then transmits these three items of information to the server 8. When the user inputs print data such as text or diagrams into the user terminal 9, the user terminal 9 may output print instructions to the image-forming device 1 according to this print data, instructing the image-forming device 1 to execute a printing operation based on the print data.

### < Server 8 >

The server 8 is a management device that manages the operating status of image-forming devices 1. The server 8 is provided with a server communication unit 83 (server-side communication interface), a server memory 82, and a server control unit 81 (computer). The server communication unit 83 is a communication interface that conducts communication between the server 8 and the image-forming device 1. The server communication unit 83 transmits a request inputted from the server control unit 81 to the image-forming device 1. The server communication unit 83 receives a response sent from the image-forming device 1 in response to a transmitted request and outputs the response to the server control unit 81.

The server communication unit 83 also communicates via a communication network with the user terminal 9 operated by the user of the image-forming device 1 and exchanges information with the user terminal 9. For example, the server communication unit 83 exchanges various information with the user terminal 9 as required for concluding an agreement. The server communication unit 83 also receives status information from the user terminal 9 indicating the status of the image-forming device 1, such as a failure status.

The server memory 82 is a storage device that stores data required for operations on the server 8. The server memory 82 stores device information for each image-forming device 1 that has been subscribed to a subscription service provided on the image formation system 100. The device information may include a device ID, a subscription flag, a subscription maximum sheet number, the model number and the date of manufacture of the image-forming device 1, and the like, for example.

The device ID is the device ID 622 stored in the main memory 62 of the image-forming device 1 and serves as identification information with which the server 8 uniquely identifies the image-forming device 1. The subscription flag is information indicating whether the image-forming device 1 has transitioned to the subscription mode, i.e., has been recognized as a subscribed machine. The subscription maximum sheet number indicates the upper limit of sheets that can be printed in subscription printing within the prescribed period stipulated under the agreement.

The server control unit 81 is a central processing unit (CPU) that performs overall control of the server 8. The server control unit 81 creates a request for the image-forming device 1 at a prescribed timing and outputs the created request to the server communication unit 83. In the present embodiment, a request includes a subscription transition command instructing the image-forming device 1 to switch to the subscription mode, for example.

Specifically, when triggered by a subscription request message transmitted from the user terminal 9, the server control unit 81 controls the server communication unit 83 to transmit the subscription transition command described above to the user-desired image-forming device 1. The server control unit 81 also transmits the above-mentioned subscription transition command via the server communication unit 83 to a replacement image-forming device 1 that is to replace the malfunctioning image-forming device 1.

On the basis of responses received from the image-forming device 1 via the server communication unit 83, the server control unit 81 also stores new device information in the server memory 82 and updates device information already stored therein. More specifically, when the server communication unit 83 receives a subscription request message from the user terminal 9 for an image-forming device 1 that the user wishes to enroll in a subscription, for example, the server control unit 81 registers new device information for the image-forming device 1 in the server memory 82. At this time, the server control unit 81 sets the initial value for the subscription flag to a value signifying "unconfirmed."

The "unconfirmed" value for the subscription flag denotes a state in which an agreement has been entered between the user and the service provider but the server 8 itself has not yet confirmed whether the prospective image-forming device 1 for executing subscription printing has transitioned to the subscription mode. When the server control unit 81 has confirmed through communication with the image-forming device 1 that the image-forming device 1 has transitioned to the subscription mode, the server control unit 81 updates the subscription flag for the image-forming device 1 to a value signifying "confirmed." On the basis of this process, the image-forming device 1 is confirmed as a subscribed machine on the image formation system 100 that includes the server 8. The server control unit 81 is an example of the computer of the present invention. The server communication unit 83 is an example of the server-side communication interface of the present invention.

### < Data Structure of the Cartridge Memory 42 >

Next, the data structure of the cartridge memory 42 in an ink cartridge 4 will be described with reference to FIG. 4. FIG. 4 illustrates the data structure of the cartridge memory 42 in the ink cartridge 4. As an example, the cartridge memory 42 has at least four storage areas from a first area to a fourth area.

The first area is a storage area for storing status information. The status information indicates whether the ink cartridge 4 is a new product or a used product. In this example, the status information is a new product flag 431. The value "1" for the new product flag 431 may signify that the ink cartridge 4 is a new product while the value "0" may signify that the ink cartridge 4 is a used product, for example.

The second area may store a cartridge ID 421. The cartridge ID 421 is a unique serial number for identifying an individual ink cartridge 4, for example. The cartridge ID 421 may include information specifying the color of ink in the ink cartridge 4, the model number, the manufacturer, the production lot, and the like.

The third area may store a cartridge type 422. The cartridge type 422 is information specifying the type of the ink cartridge 4. In the present embodiment, the ink cartridge 4 may be set to at least one of two types: "subscription" and "commercial."

An ink cartridge 4 whose type is set to "subscription" in the third area is a special ink cartridge used in the subscription service, i.e., special subscription-based consumable. Hereinafter, an ink cartridge of this type will be called a "subscription cartridge." The image-forming device 1 can execute subscription printing while subscription cartridges are mounted therein. The service provider supplies subscription cartridges to users who have entered an agreement for image-forming devices 1.

An ink cartridge 4 whose type is set to "commercial" in the third area is a commercially available ink cartridge that can be purchased from electronics retail stores, online shopping websites, and the like. Hereinafter, an ink cartridge of this type will be called a "commercial cartridge." Commercial cartridges may be genuine products manufactured by the manufacturer of the image-forming device 1, or third-party products manufactured by a different party from the manufacturer of the image-forming device 1.

The fourth area may store residual ink quantity information 423. The residual ink quantity information 423 indicates the residual quantity of ink in the ink cartridge 4. In this example, the residual quantity of ink is a value associated with one of a plurality of levels of residual quantities from "full" to "empty." This value is stored in the fourth area. Each level of residual ink quantity may be expressed by a character string, such as "FULL" or "EMPTY," or a numerical value, such as "100%" through "0%," or a combination of a character string and numerical value based on the values described above.

Here, when an ink cartridge 4 is mounted into the cartridge housing unit 4A, the controller 61 of the image-forming device 1 reads the new product flag 431 stored in the cartridge memory 42 of the mounted ink cartridge 4. In a case where the new product flag 431 indicates that the ink cartridge 4 is a new product, the controller 61 reads the cartridge ID 421, cartridge type 422, and residual ink quantity information 423 from the cartridge memory 42 and stores this information in the main memory 62 as the cartridge information 621.

### < Process Flow When Replacing the Image-Forming Device 1 >

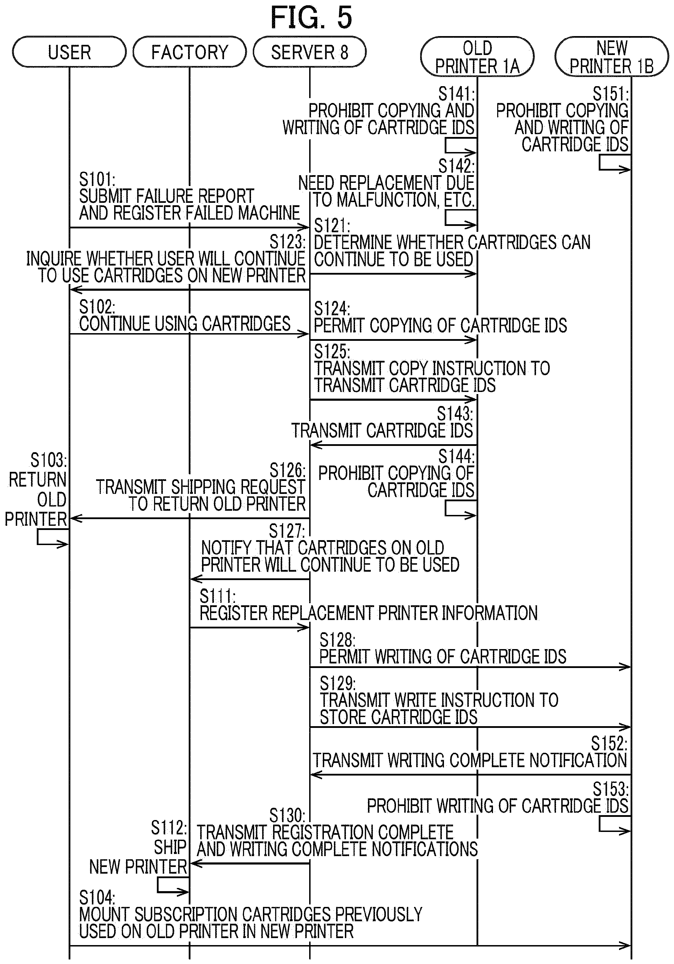

Next, steps in a process performed on each device in the image formation system 100 when an image-forming device 1 registered as a subscribed machine is being replaced due to a malfunction or other failure will be described with reference to FIG. 5. FIG. 5 is a sequence diagram illustrating an example of operations performed by the various devices in the image formation system 100 when an image-forming device 1 is being replaced with another image-forming device 1. In the following description, an image-forming device 1 that is currently under an agreement but has malfunctioned or otherwise failed will be called the "old printer 1A." Further, the image-forming device 1 that will replace this old printer 1A and is the subject of a new agreement will be called the "new printer 1B." The old printer 1A is an example of the first electronic device of the present invention. The new printer 1B is an example of the second electronic device and the electronic device of the present invention.

In the example of FIG. 5, the user first starts up the image-forming device 1, hereinafter called "old printer 1A," by turning on the power of the old printer 1A. For the sake of clarity, this image-forming device 1 will be referred to as the "old printer 1A," even though the occurrence of failure has not yet been determined. Furthermore, the controller 61 of the old printer 1A will be referred to as the "controller 61A."

When the old printer 1A is started up by the user, in S141 the controller 61A of the old printer 1A prohibits the cartridge IDs stored in the cartridge information 621 at the time of startup from being transmitted to the server 8 or another device via the communication unit 63 to be copied.

Specifically, the controller 61A of the old printer 1A reads a copy permission flag from the main memory 62 at the time of startup, sets this copy permission flag to OFF, and re-stores the copy permission flag in the main memory 62. When the copy permission flag is set to OFF, the controller 61A is prohibited from copying the cartridge IDs stored in the cartridge information 621 by transmitting the cartridge IDs to the server 8 or another device via the communication unit 63.

When the copy permission flag is set to ON, the controller 61A is permitted to copy the cartridge IDs stored in the cartridge information 621 by transmitting the cartridge IDs to the server 8 or another device via the communication unit 63.

In S141 the controller 61A also prevents cartridge IDs for ink cartridges 4 mounted in another image-forming device 1 that have been received via the communication unit 63 from being stored as the received cartridge ID information 627 at the time of startup. Specifically, the controller 61A reads a write permission flag from the main memory 62 at the time of startup, sets this write permission flag to OFF, and re-stores the write permission flag in the main memory 62. When the write permission flag is set to OFF, the controller 61A is prohibited from storing (writing) cartridge IDs for ink cartridges 4 mounted in another image-forming device 1 that have been received via the communication unit 63 as the received cartridge ID information 627.

Note that when the write permission flag is set to ON, the controller 61A is permitted to store (write) cartridge IDs for ink cartridges 4 mounted in another image-forming device 1 that have been received via the communication unit 63 as the received cartridge ID information 627.

Next, the controller 61A determines in S142 whether the image-forming device 1, i.e., old printer 1A has malfunctioned and needs to be replaced with another image-forming device 1 (subscribed machine).

Specifically, when determining whether a failure has occurred in the old printer 1A, the controller 61A reads the status information 624 from the main memory 62 and executes the determination based on this status information 624, for example. In a case where the controller 61A determines on the basis of the status information 624 that a failure has occurred in the old printer 1A, in S142 the controller 61A notifies the user that a failure has occurred and that the old printer 1A must be replaced with a new image-forming device 1 (subscribed machine). For example, the controller 61A notifies the user by displaying a message on the display 64 indicating that a failure has occurred and that the old printer 1A must be replaced with a new image-forming device 1 (subscribed machine).

The user reads the notification displayed on the display 64 of the old printer 1A and recognizes that a failure or the like has occurred in the old printer 1A and that the old printer 1A must be replaced with a new image-forming device 1 (subscribed machine). In S101 the user operates the user terminal 9 to access via the communication network a subscriber's only website managed by the server 8 in order to submit a failure report and register the failed machine. Specifically, the user notifies the server 8 that a failure requiring replacement of the old printer 1A has occurred and registers information including the device ID 622 of the old printer 1A and user identification information identifying the user.

The server control unit 81 receives this notification from the user terminal 9 via the server communication unit 83. Upon receiving a notification indicating that a failure requiring replacement of the old printer 1A has occurred, the server control unit 81 sends a transmission instruction to the old printer 1A via the server communication unit 83 instructing the old printer 1A to transmit the residual ink quantity information 423 for each ink cartridge 4 mounted in the old printer 1A.

When the server control unit 81 subsequently receives the residual ink quantity information 423 for each of the ink cartridges 4 from the old printer 1A, in S121 the server control unit 81 determines whether the ink cartridges 4 can continue to be used on the new printer 1B.

In a case where the server control unit 81 determines that each ink cartridge 4 can continue to be used on the new printer 1B, in S123 the server control unit 81 sends an inquiry to the user terminal 9 asking whether the user will continue to use the ink cartridges 4 on the new printer 1B. For example, the server control unit 81 transmits a display instruction to the user terminal 9 via the server communication unit 83 instructing the user terminal 9 to display a message on the display of the user terminal 9 inquiring whether the user will continue to use the ink cartridges 4 on the new printer 1B.

Upon receiving the display instruction, the user terminal 9 displays a message on the display inquiring whether the user will continue to use the ink cartridges 4 on the new printer 1B. Thus, in S123 the server control unit 81 makes the inquiry by displaying on the display of the user terminal 9 in order to confirm whether the user will continue to use the ink cartridges 4 on the new printer 1B.

The server control unit 81 confirms the user's desire to continue using the ink cartridges 4 on the basis of instructions inputted by the user through the operating unit of the user terminal 9. Through operations on the operating unit of the user terminal 9, the user inputs instructions indicating whether to continue using the ink cartridges 4 on the new printer 1B. When the user inputs an indication to continue using the ink cartridges 4, in S102 the user terminal 9 notifies the server 8 via the communication unit that the ink cartridges 4 will continue to be used on the new printer 1B.

Upon receiving this notification via the server communication unit 83 indicating that the user will continue using the ink cartridges 4 on the new printer 1B, in S124 the server control unit 81 notifies the old printer 1A via the server communication unit 83 that copying of the cartridge IDs is permitted. When a copy permission notification is received from the server 8 via the communication unit 63, the controller 61A sets the copy permission flag to ON.

In S125 the server control unit 81 transmits a copy instruction to the old printer 1A via the server communication unit 83 instructing the old printer 1A to transmit the cartridge IDs of the ink cartridges 4 to the server 8. Upon receiving the copy instruction from the server 8 via the communication unit 63, in S143 the controller 61A sends the cartridge IDs stored in the cartridge information 621 to the server 8 via the communication unit 63. Subsequently, in S144 the controller 61A sets the copy permission flag to OFF, again preventing the cartridge IDs stored in the cartridge information 621 from being transmitted to and copied on the server 8 or another device via the communication unit 63.

The server control unit 81 stores the cartridge IDs for the ink cartridges 4 received from the old printer 1A via the server communication unit 83 in the server memory 82. Subsequently, in S126 the server control unit 81 transmits a shipping request to the user terminal 9 via the server communication unit 83 requesting the user of the user terminal 9 to return the old printer 1A to the service provider. In S103 the user confirms the shipping request via the user terminal 9 and returns the old printer 1A to the service provider.

Next, in S 127 the server control unit 81 notifies the terminal (not illustrated) of the service provider (hereinafter referred to as "provider's terminal") at the service provider's factory via the server communication unit 83 that the old printer 1A must be replaced. In S127 the server control unit 81 also notifies the provider's terminal that the ink cartridges 4 (consumables) on the old printer 1A will continue to be used on the new printer 1B.

The provider's terminal at the factory receives the notification from the server 8 via the communication unit (not illustrated) of the provider's terminal. Upon receiving the notification to replace the old printer 1A via the provider's terminal, the service provider prepares a new printer 1B to replace the old printer 1A. However, since the ink cartridges 4 in the old printer 1A are to be used in the new printer 1B (subscribed machine), the service provider does not need to prepare new subscription cartridges 4. In S111 the service provider transmits replacement printer information including the serial number and model number of the new printer 1B prepared as the replacement printer to the server 8 as information on the new subscribed machine. The service provider also connects the communication unit 63 in the new printer 1B prepared at the factory to the communication network and turns on and starts up the new printer 1B.

In the following description, the controller 61 of the new printer 1B will also be referred to as the "controller 61B." When the new printer 1B starts up, in S151 the controller 61B prohibits cartridge IDs stored in the cartridge information 621 from being transmitted to the server 8 or another device via the communication unit 63, preventing the cartridge IDs from being copied. Specifically, the controller 61B of the new printer 1B reads the copy permission flag from the main memory 62, sets this copy permission flag to OFF, and re-stores the copy permission flag in the main memory 62.

In S151 the controller 61B also prohibits cartridge IDs for ink cartridges 4 mounted in another image-forming device 1, which cartridge IDs have been received via the communication unit 63, from being stored as the received cartridge ID information 627 upon startup. Specifically, the controller 61B reads the write permission flag from the main memory 62, sets this write permission flag to OFF, and re-stores the write permission flag in the main memory 62.

In the meantime, the server control unit 81 receives the replacement printer information including the serial number and model number of the new printer 1B from the provider's terminal via the server communication unit 83 as information on the new subscribed machine. The server control unit 81 stores this replacement printer information in the server memory 82 to register the same as information on the new subscribed machine.

In S128 the server control unit 81 then notifies the new printer 1B via the server communication unit 83 that writing of cartridge IDs is permitted. Upon receiving the notification permitting writing of cartridge IDs from the server 8 via the communication unit 63, the new printer 1B sets the write permission flag to ON.

Next, the server control unit 81 transmits the cartridge IDs for the ink cartridges 4 in the old printer 1A to the new printer 1B via the server communication unit 83. In S129 the server control unit 81 transmits a write instruction to the new printer 1B via the server communication unit 83 instructing the new printer 1B to store the transmitted cartridge IDs in the main memory 62 as the received cartridge ID information 627.

Upon receiving the cartridge IDs for the ink cartridges 4 in the old printer 1A via the communication unit 63, the controller 61B stores the cartridge IDs in the main memory 62. Next, when the controller 61B receives the write instruction from the server 8 via the communication unit 63, the controller 61B stores the cartridge IDs for the ink cartridges 4 in the main memory 62 as the received cartridge ID information 627. In S152 the controller 61B transmits a writing complete notification to the server 8 via the communication unit 63 indicating that the cartridge IDs for the ink cartridges 4 have been stored as the received cartridge ID information 627.

In S 153 the controller 61B sets the write permission flag to OFF, prohibiting the cartridge IDs for the ink cartridges 4 mounted in other image-forming devices 1, which cartridge IDs will be received via the communication unit 63, from being stored as the received cartridge ID information 627.

After receiving a writing complete notification from the new printer 1B via the server communication unit 83, in S130 the server control unit 81 transmits a registration complete notification to the provider's terminal at the factory via the server communication unit 83 indicating that registration of the new printer 1B as a subscribed machine is complete. In S130 the server control unit 81 also transmits a writing complete notification to the provider's terminal at the factory indicating that the new printer 1B has stored the cartridge IDs as the received cartridge ID information 627.

At the factory, the service provider receives the registration complete and writing complete notifications from the server 8 via the provider's terminal. In S 112 the service provider configures user information in the new printer 1B at the factory and subsequently ships the new printer 1B to the user. Specifically, the service provider sets the user information as follows:
(i) Stores the serial number of the new printer 1B in the device ID 622 of the main memory 62 on the new printer 1B as identification information for identifying the new printer 1B; (ii) Stores a value corresponding to "subscription mode" in the mode information 623 of the main memory 62 on the new printer 1B indicating that the new printer 1B will operate as a subscribed machine; and (iii) Initializes the first sheet counter 625 and second sheet counter 626 in the main memory 62 on the new printer 1B.

In S104, the user receives the new printer 1B shipped from the provider and mounts the ink cartridges 4 previously used on the old printer 1A in the new printer 1B. At this time, the user can continue using the ink cartridges 4 of the old printer 1A since the cartridge IDs for the ink cartridges 4 previously mounted in the old printer 1A are already stored in the main memory 62 of the new printer 1B.

According to the above process, the server control unit 81 first notifies the old printer 1A of permission to copy the cartridge IDs and subsequently sends a copy instruction to the old printer 1A instructing the old printer 1A to transmit the cartridge IDs for the ink cartridges 4 to the server 8. These actions enable the server control unit 81 to acquire the cartridge IDs for ink cartridges 4 mounted in the old printer 1A.

The server control unit 81 then notifies the provider's terminal at the factory that the old printer 1A is to be replaced and that the ink cartridges 4 (consumables) in the old printer 1A are to be used on the new printer 1B replacing the old printer 1A. As a result, the server control unit 81 receives replacement printer information including the serial number and model number of the new printer 1B from the provider's terminal as information on the new subscribed machine. The server control unit 81 stores this replacement printer information received via the server communication unit 83 in the server memory 82 to register information on the new subscribed machine.

Thereafter, the server control unit 81 notifies the new printer 1B via the server communication unit 83 of permission to write the cartridge IDs and transmits the cartridge IDs for the ink cartridges 4 in the old printer 1A to the new printer 1B. The server control unit 81 then transmits a write instruction to the new printer 1B instructing the new printer 1B to store the transmitted cartridge IDs in the main memory 62 as the received cartridge ID information 627.

After receiving the write permission notification, the controller 61B of the new printer 1B receives the cartridge IDs for the ink cartridges 4 in the old printer 1A and the write instruction notification and stores the cartridge IDs as the received cartridge ID information 627. As a result, the controller 61B of the new printer 1B can continue using the ink cartridges 4 that had been used on the old printer 1A.

### < Sample Process Flow on the Server 8 >

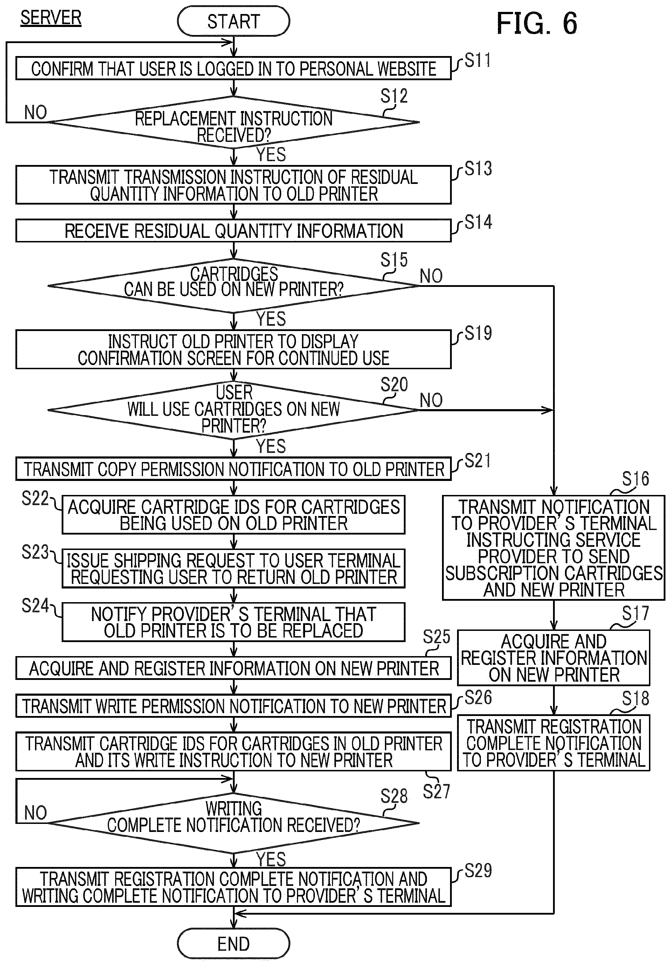

Next, an example of steps in the process performed on the server 8 among the example of the operations on the image formation system 100 described in FIG. 5 will be described with reference to FIG. 6. FIG. 6 is a flowchart illustrating an example of the steps in the process executed on the server 8 when an old printer 1A is being replaced with a new printer 1B. The server control unit 81 executes the process illustrated in FIG. 6 when the user logs in to a personal website for subscribed users via the user terminal 9. The program implementing the process in FIG. 6 is stored in the server memory 82 of the server 8.

In S11 at the beginning of FIG. 6, the server control unit 81 confirms that the user is logged in to the personal website. After confirming that the user is logged in to the personal website, in S12 the server control unit 81 determines whether a replacement instruction to replace the old printer 1A has been received. This determination is made on the basis of whether the server control unit 81 has received a notification of a replacement instruction from the user terminal 9 via the server communication unit 83 requesting the replacement of the old printer 1A due to a malfunction or other failure.

When the server control unit 81 determines that a replacement instruction has not been received (S12: NO), the server control unit 81 repeats the process from S 11.

However, when the server control unit 81 determines that a replacement instruction has been received (S12: YES), the server control unit 81 advances to S13.

In S13 the server control unit 81 sends a transmission instruction to the old printer 1A via the server communication unit 83 instructing the old printer 1A to transmit the residual ink quantity information 423 for each mounted ink cartridge 4 specifying the residual ink quantity in the ink cartridge 4.

In S14 the server control unit 81 receives the residual ink quantity information 423 for each mounted ink cartridge 4 specifying the residual ink quantity in the ink cartridge 4 from the old printer 1A via the server communication unit 83. In S15 the server control unit 81 determines whether the ink cartridges 4 mounted in the old printer 1A can continue to be used on the new printer 1B. For example, the server control unit 81 determines whether the residual quantity of ink in each ink cartridge 4 mounted in the old printer 1A is greater than or equal to the amount of ink required to fill the recording head 32, i.e., the amount of ink that can be transferred to the recording head 32 to complete an initial introduction of ink.

Here, the initial introduction of ink is a preparatory process for performing printing operations (prescribed operation, consumption process) with the recording unit 3. For example, the valves 66 (see FIG. 2) are closed when the image-forming device 1 is shipped from the factory to restrict ink from transferring from the ink cartridges 4 into the recording head 32. Once the user receives the new printer 1B and first mounts new ink cartridges 4 into the new printer 1B, the controller 61 opens the valves 66 for initially introducing ink into the recording head 32, i.e., for filling the recording head 32 with ink so that the recording unit 3 is ready to perform printing operations.

When the server control unit 81 determines that the ink cartridges 4 mounted in the old printer 1A cannot continue to be used on the new printer 1B (S15: NO), the server control unit 81 advances to S16. For example, the server control unit 81 advances to S16 when determining that the residual quantity of ink in each ink cartridge 4 is less than the quantity of ink required for the initial introduction (S15: NO).

In S16 the server control unit 81 transmits a notification via the server communication unit 83 to the provider's terminal at the factory instructing the service provider to send new ink cartridges 4 along with the new printer 1B replacing the old printer 1A. As a result, the service provider prepares the new printer 1B to replace the old printer 1A and the new ink cartridges 4 at the factory. Next, the service provider transmits replacement printer information including the serial number and model number of the prepared new printer 1B to the server 8 via the provider's terminal at the factory as information on the new subscribed machine.

In S17 the server control unit 81 acquires the replacement printer information received via the server communication unit 83 and stores the replacement printer information in the server memory 82 to register the same as information on the new subscribed machine. In S18 the server control unit 81 sends a registration complete notification to the provider's terminal via the server communication unit 83 indicating that the new printer 1B has been registered as a subscribed machine, and subsequently ends the process illustrated in FIG. 6. The service provider receives the registration complete notification from the server 8 via the provider's terminal at the factory. At the factory, the service provider configures the above user information in the new printer 1B (see FIG. 5) and ships the new printer 1B and the new subscription cartridges 4 to the user.

However, when the server control unit 81 determines in S15 that the ink cartridges 4 mounted in the old printer 1A can continue to be used on the new printer 1B (S15: YES), the server control unit 81 advances to S19. For example, the server control unit 81 advances to S19 when determining that the residual quantity of ink in each ink cartridge 4 is greater than or equal to the quantity of ink required for the initial introduction (S15: YES).

In S19 the server control unit 81 transmits a display instruction to the old printer 1A via the server communication unit 83 for displaying a message or a screen (a confirmation screen for continued use, for example) on the display 64 inquiring whether the user will continue to use the ink cartridges 4 on the new printer 1B. In S20 the server control unit 81 determines whether a notification has been received from the old printer 1A via the server communication unit 83 indicating that the ink cartridges 4 will continue to be used on the new printer 1B. When the server control unit 81 has not received a notification from the old printer 1A via the server communication unit 83 indicating that the ink cartridges 4 will continue to be used on the new printer 1B (S20: NO), the server control unit 81 executes the process from S16 described above.

However, when the server control unit 81 has received a notification from the old printer 1A indicating that the ink cartridges 4 will continue to be used on the new printer 1B (S20: YES), the server control unit 81 advances to S21. In S21 the server control unit 81 sends a copy permission notification to the old printer 1A via the server communication unit 83 permitting copying of the cartridge IDs. More specifically, in S21 the server control unit 81 sends the copy permission notification to the old printer 1A via the server communication unit 83 instructing the old printer 1A to transmit the cartridge IDs for the ink cartridges 4 which are being used on the old printer 1A to the server 8. In response to the copy permission notification, the old printer 1A transmits the cartridge IDs for the ink cartridges 4 which is being used on the old printer 1A to the server 8, as described later. In S22 the server control unit 81 acquires the cartridge IDs for the ink cartridges 4 received from the old printer 1A via the server communication unit 83 and stores the acquired cartridge ID in the server memory 82. Subsequently, in S23 the server control unit 81 issues a shipping request to the user terminal 9 via the server communication unit 83 requesting the user of the user terminal 9 to return the old printer 1A to the service provider.

In S24 the server control unit 81 notifies the provider's terminal at the factory via the server communication unit 83 that the old printer 1A is to be replaced due to a malfunction or the like and that the ink cartridges 4 (consumables) in the old printer 1A are to be used on the new printer 1B replacing the old printer 1A. In response to the notification, the provider's terminal transmits replacement printer information to the server 8, as described later.

The server control unit 81 receives the replacement printer information including the serial number and model number of the new printer 1B via the server communication unit 83 as information on the new subscribed machine. In S25 the server control unit 81 stores this replacement printer information in the server memory 82 to register information on the new subscribed machine.

In S26 the server control unit 81 transmits a write permission notification to the new printer 1B via the server communication unit 83 permitting writing of cartridge IDs. Then in S27 the server control unit 81 transmits the cartridge IDs for the ink cartridges 4 in the old printer 1A to the new printer 1B via the server communication unit 83. In S27 the server control unit 81 also transmits a write instruction to the new printer 1B via the server communication unit 83 instructing the new printer 1B to store the transmitted cartridge IDs in the main memory 62 as the received cartridge ID information 627.

In S28 the server control unit 81 continues to wait while a writing complete notification has not been received from the new printer 1B via the server communication unit 83 (S28: NO). When the server control unit 81 receives a writing complete notification from the new printer 1B indicating that the cartridge IDs for the ink cartridges 4 have been stored as the received cartridge ID information 627 (S28: YES), the server control unit 81 advances to S29.

In S29 the server control unit 81 transmits a registration complete notification to the provider's terminal at the factory via the server communication unit 83 indicating that registration of the new printer 1B as a subscribed machine is complete. In S29 the server control unit 81 also sends a writing complete notification to the provider's terminal at the factory via the server communication unit 83 indicating that the new printer 1B has stored the cartridge IDs for the ink cartridges 4 in the old printer 1A as the received cartridge ID information 627, and subsequently ends the process in FIG. 6.

### < Sample Process Flow on the Provider's Terminal at the Factory >

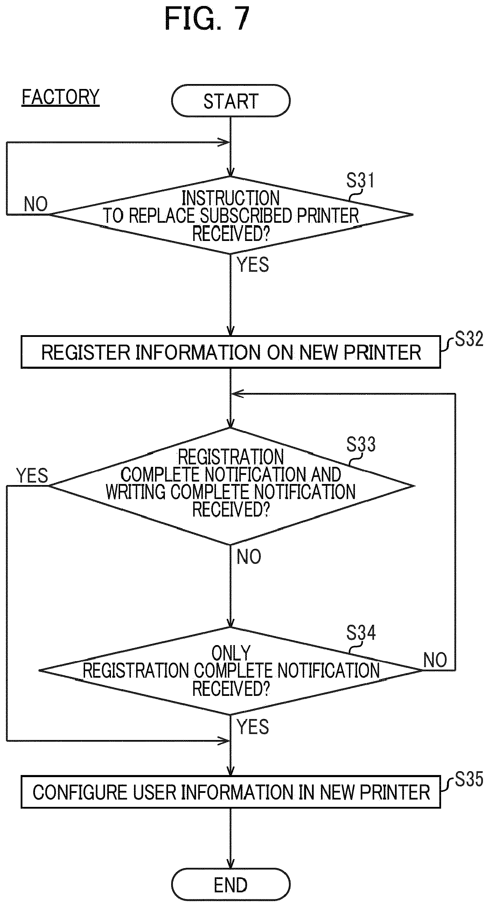

Next, an example of steps in the process performed at the factory on the provider's terminal among the example of the operations on the image formation system 100 described in FIG. 5 will be described with reference to FIG. 7. FIG. 7 is a flowchart illustrating steps in the process executed on the provider's terminal at the factory when an old printer 1A is being replaced with a new printer 1B. The program implementing the process in FIG. 7 is stored in a storage device on the provider's terminal.

In S31 of FIG. 7, the control device (not illustrated) in the provider's terminal determines whether an instruction to replace a subscribed printer has been received. Specifically, the control device waits to receive a notification via a communication unit (not illustrated) in the provider's terminal for replacing an old printer 1A that is a subscribed machine. While a notification to replace an old printer 1A has not been received (S31: NO), the control device continues to wait for a notification. Once a notification to replace a subscribed old printer 1A is received via the communication unit (S31: YES), the control device advances to S32.

In S32 the control device of the provider's terminal registers information on a new printer 1B. Specifically, the service provider prepares a new printer 1B to replace the old printer 1A. In S32 the service provider then transmits replacement printer information including the serial number and model number of the new printer 1B prepared above to the server 8 via the provider's terminal at the factory as information on the new subscribed machine, thereby registering the information for the new subscribed machine. The service provider also connects the communication unit 63 in the new printer 1B prepared at the factory to the communication network and then turns on the new printer 1B to start up the new printer 1B.

In S33 the control device of the provider's terminal determines whether a registration complete notification and a writing complete notification have been received. Specifically, in S33 the control device of the provider's terminal determines whether both a registration complete notification indicating that the new printer 1B has been registered as a subscribed machine and a writing complete notification indicating that the new printer 1B has stored the cartridge IDs as the received cartridge ID information 627 has been received via the communication unit of the provider's terminal. The control device of the provider's terminal advances to S34 when determining that one or both of the registration complete notification and writing complete notification has not been received via the communication unit (S33: NO). In S34 the control device of the provider's terminal determines whether only a registration complete notification has been received via the communication unit indicating that the new printer 1B has been registered as a subscribed machine.

When the control device of the provider's terminal determines that only the registration complete notification for the new printer 1B has been received (S34: YES), in S35 the control device configures the user information described above in the new printer 1B and ends the process in FIG. 7. Subsequently, the service provider ships the new printer 1B with new ink cartridges 4 from the factory to the user.

On the other hand, when the control device of the provider's terminal determines that neither the registration complete notification nor the writing complete notification has been received via the communication unit (S34: NO), the control device returns to S33 and repeats the process described above.

Additionally, when the control device of the provider's terminal determines in S33 that both the registration complete notification and the writing complete notification have been received via the communication unit (S33: YES), in S35 the control device configures the user information described above in the new printer 1B and ends the process in FIG. 7. Subsequently, the service provider ships the new printer 1B from the factory to the user.

### < Sample Process Flow on the Old Printer 1A >

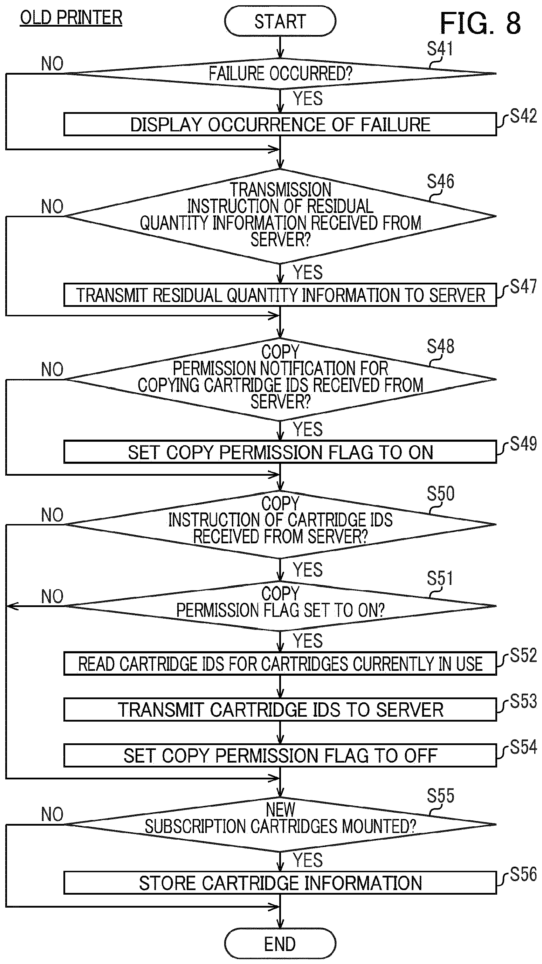

Next, an example of steps in the process performed on the old printer 1A among the example of the operations on the image formation system 100 described in FIG. 5 will be described with reference to FIG. 8. FIG. 8 is a flowchart illustrating an example of the process executed on the old printer 1A when the old printer 1A is being replaced with a new printer 1B. The program implementing the process in FIG. 8 is stored in the main memory 62 of the old printer 1A. The controller 61A of the old printer 1A executes the process in FIG. 8 at prescribed intervals. The prescribed intervals may be time periods of several milliseconds to several tens of milliseconds, for example.

In S41 at the beginning of the process in FIG. 8, the controller 61A reads the status information 624 from the main memory 62 and determines whether a failure has occurred in the old printer 1A requiring the old printer 1A to be replaced with a new printer 1B. When the controller 61A determines that a failure has not occurred on the old printer 1A (S41: NO), the controller 61A advances to S46 described later.

However, when the controller 61A determines that a failure has occurred on the old printer 1A requiring the old printer 1A to be replaced with a new printer 1B (S41: YES), the controller 61A advances to S42. In S42 the controller 61A notifies the user that a failure has occurred by displaying a message on the display 64 that a failure has occurred on the old printer 1A along with details of the failure included in the status information 624. Subsequently, the controller 61A advances to S46.

In S46 the controller 61A determines whether a transmission instruction has been received from the server 8 via the communication unit 63 instructing the old printer 1A to transmit residual ink quantity information 423 for each of the ink cartridges 4 mounted in the old printer 1A. When the controller 61A determines that a transmission instruction has not been received (S46: NO), the controller 61A advances to S48 described below.

On the other hand, when the controller 61A determines that a transmission instruction has been received (S46: YES), the controller 61A advances to S47. In S47 the controller 61A reads residual ink quantity information for the ink cartridges 4 from the cartridge information 621 stored in the main memory 62 and transmits the residual ink quantity information to the server 8 via the communication unit 63. Subsequently, the controller 61A advances to S48.

In S48 the controller 61A determines whether a copy permission notification has been received from the server 8 via the communication unit 63 permitting the copying of cartridge IDs. When the controller 61A determines that a copy permission notification has not been received from the server 8 (S48: NO), the controller 61A advances to S50 described later.

However, when the controller 61A determines that a copy permission notification permitting the copying of cartridge IDs has been received from the server 8 via the communication unit 63 (S48: YES), the controller 61A advances to S49. In S49 the controller 61A reads the copy permission flag from the main memory 62, sets this copy permission flag to ON, and re-stores the copy permission flag in the main memory 62. Subsequently, the controller 61A advances to S50.

In S50 the controller 61A determines whether a copy instruction has been received from the server 8 via the communication unit 63 instructing the old printer 1A to transmit the cartridge IDs for the ink cartridges 4 to the server 8. When the controller 61A determines that a copy instruction has not been received from the server 8 (S50: NO), the controller 61A advances to S55 described later. However, when the controller 61A determines that a copy instruction has been received from the server 8 via the communication unit 63 (S50: YES), the controller 61A advances to S51.

In S51 the controller 61A reads the copy permission flag from the main memory 62 and determines whether the copy permission flag is set to ON. When the controller 61A determines that the copy permission flag is set to OFF (S51: NO), the controller 61A infers that copying of the cartridge IDs stored in the cartridge information 621 is prohibited and advances to S55 described later.

However, when the controller 61A determines that the copy permission flag is set to ON (S51: YES), the controller 61A advances to S52. In S52 the controller 61A reads the cartridge IDs for the ink cartridges 4 currently in use from the cartridge information 621 stored in the main memory 62. In S53 the controller 61A transmits the cartridge IDs for the ink cartridges 4 read from the cartridge information 621 to the server 8 via the communication unit 63. In S54 the controller 61A reads the copy permission flag from the main memory 62, sets this copy permission flag to OFF, and re-stores the copy permission flag in the main memory 62. Subsequently, the controller 61A advances to S55.

In S55 the controller 61A determines whether new subscription cartridges 4 are mounted into the cartridge housing units 4A in the old printer 1A. Specifically, when ink cartridges 4 are mounted into the cartridge housing units 4A, the controller 61A reads the new product flag 431 and cartridge type 422 from the cartridge memory 42 of each mounted ink cartridge 4 via the corresponding connector 101. The controller 61A then determines that an ink cartridge 4 is a new subscription cartridge when the new product flag 431 is set to "1" and the cartridge type 422 is set to "subscription," for example.

When the controller 61A determines that the ink cartridges 4 mounted into the cartridge housing units 4A in the old printer 1A are not new subscription cartridges (S55: NO), the controller 61A ends the process in FIG. 8. However, when the controller 61A determines that new subscription cartridges 4 are mounted into the cartridge housing units 4A (S55: YES), the controller 61A advances to S56.

In S56 the controller 61A reads the cartridge ID 421, cartridge type 422, and residual ink quantity information 423 from the cartridge memory 42 of each new ink cartridge 4 mounted in the old printer 1A. The controller 61A then stores the cartridge ID 421, cartridge type 422, and residual ink quantity information 423 for each ink cartridge 4 in the cartridge information 621 of the main memory 62. Subsequently, the controller 61A ends the process in FIG. 8.

### < Sample Process Flow on the New Printer 1B >

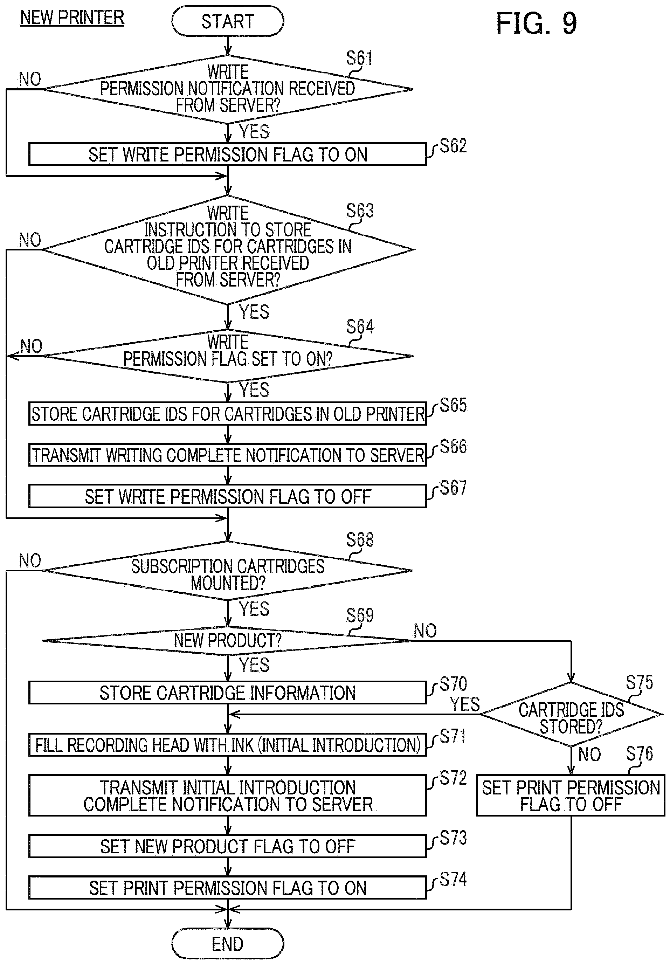

Next, an example of steps in the process performed on the new printer 1B among the example of the operations of the image formation system 100 described in FIG. 5 will be described with reference to FIG. 9. FIG. 9 is a flowchart illustrating an example of steps in the process executed on the new printer 1B when an old printer 1A is being replaced with the new printer 1B. The program that implements the process in FIG. 9 is stored in the main memory 62 of the new printer 1B. The controller 61B of the new printer 1B executes the process in FIG. 9 at prescribed intervals. The prescribed intervals may be time periods of several milliseconds to several tens of milliseconds, for example.

In S61 at the beginning of the process in FIG. 9, the controller 61B determines whether a write permission notification permitting the writing of cartridge IDs has been received from the server 8 via the communication unit 63. When the controller 61B determines that a write permission notification permitting the wiring of cartridge IDs has not been received from the server 8 (S61: NO), the controller 61B advances to S63 described later.

However, when the controller 61B determines that a write permission notification permitting the writing of cartridge IDs has been received from the server 8 (S61: YES), the controller 61B advances to S62. In S62 the controller 61B reads the write permission flag from the main memory 62, sets this write permission flag to ON, and re-stores the write permission flag in the main memory 62. Subsequently, the controller 61B advances to S63.

In S63 the controller 61B determines whether cartridge IDs for the ink cartridges 4 in the old printer 1A and a write instruction instructing the new printer 1B to store the cartridge IDs as the received cartridge ID information 627 have been received from the server 8. When the controller 61B determines that a write instruction has not been received from the server 8 (S63: NO), the controller 61B advances to S68 described later.

However, when the controller 61B determines that a write instruction has been received from the server 8 (S63: YES), the controller 61B advances to S64. In S64 the controller 61B reads the write permission flag from the main memory 62 and determines whether the write permission flag is set to ON.

When the controller 61B determines that the write permission flag is set to OFF (S64: NO), the controller 61B infers that storing of cartridge IDs for the ink cartridges 4 in the received cartridge ID information 627 is prohibited, and subsequently advances to S68 described later. However, when the controller 61B determines that the write permission flag is set to ON (S64: YES), the controller 61B advances to S65.

In S65 the controller 61B stores the cartridge IDs, which have been received from the server 8 in S63 for the ink cartridges 4 in the old printer 1A, in the main memory 62 as the received cartridge ID information 627. In S66 the controller 61B transmits a writing complete notification to the server 8 via the communication unit 63 indicating that the cartridge IDs for the ink cartridges 4 have been stored (written) as the received cartridge ID information 627. Subsequently, in S67 the controller 61B reads the write permission flag from the main memory 62, sets this write permission flag to OFF, and re-stores the write permission flag in the main memory 62. Next, the controller 61B advances to S68.

In S68 the controller 61B determines whether subscription cartridges 4 are mounted into the cartridge housing units 4A in the new printer 1B. Specifically, when ink cartridges 4 are mounted into the cartridge housing units 4A, the controller 61B reads the cartridge type 422 from the cartridge memory 42 in each mounted ink cartridge 4 via the corresponding connector 101. When the cartridge type 422 is set to "subscription," for example, the controller 62B determines that a subscription cartridge 4 is mounted into the cartridge housing unit 4A.

Alternatively, when ink cartridges 4 are mounted into the cartridge housing units 4A, the controller 61B may, for example, read the cartridge ID 421 from the cartridge memory 42 of each mounted ink cartridge 4 via the corresponding connector 101 and determine that the mounted ink cartridge 4 is a subscription cartridge 4 in a case where the cartridge ID 421 is stored in the received cartridge ID information 627 of the main memory 62.

When the controller 61B determines that the mounted ink cartridges 4 are not subscription cartridges 4 (S68: NO), the controller 61B ends the process in FIG. 9. However, when determining that the mounted ink cartridges 4 are subscription cartridges 4 (S68: YES), the controller 61B advances to S69. In S69 the controller 61B determines whether the mounted subscription cartridges 4 are new products. Specifically, the controller 61B reads the new product flag 431 from the cartridge memory 42 of each mounted subscription cartridge 4 via the corresponding connector 101. When the new product flag 431 is set to "1", for example, the controller 61B determines that the mounted subscription cartridge 4 is a new product.

When the controller 61B determines that the mounted subscription cartridges 4 are new product (S69: YES), the controller 61B advances to S70. In S70 the controller 61B reads the cartridge ID 421, cartridge type 422, and residual ink quantity information 423 from the cartridge memory 42 of each mounted new subscription cartridge 4 via the corresponding connector 101. The controller 61B then stores the cartridge ID 421, cartridge type 422, and residual ink quantity information 423 for each subscription cartridge 4 in the main memory 62 as the cartridge information 621 and advances to S71.

In S71 the controller 61B opens the valves 66 to initially introduce ink from the ink cartridges 4 into the recording head 32, i.e., to fill the recording head 32 with ink so that the new printer 1B is ready to print. Once the initial introduction of ink into the recording head 32 is completed, in S72 the controller 61B transmits an initial introduction complete notification to the server 8 via the communication unit 63 indicating that the initial introduction of ink is complete.

In S73 the controller 61B reads the new product flag 431 from the cartridge memory 42 of each mounted subscription cartridge 4 via the corresponding connector 101. The controller 61B sets the new product flag 431 to "0", for example, thereby setting the new product flag 431 to OFF, and re-stores the new product flag 431 in the cartridge memory 42. In this way, in S73 the controller 61B sets the new product flag 431 to indicate that the subscription cartridge 4 is a used product. In S74 the controller 61B reads a print permission flag from the main memory 62, sets this print permission flag to ON, and re-stores the print permission flag in the main memory 62. Subsequently, the controller 61B ends the process in FIG. 9.

The print permission flag indicates that printing with the recording head 32 is permitted when set to ON and not permitted when set to OFF. By setting the print permission flag to ON in S74, the new printer 1B is placed in a print-ready state. Note that when the new printer 1B is shipped from the factory, the print permission flag is set to OFF and stored in the main memory 62 so that the new printer 1B is in a non-print-ready state.

On the other hand, when the controller 61B determines in S69 that the mounted subscription cartridges 4 are used products (e.g., when the new product flags 431 are set to "0") (S69: NO), the controller 61B advances to S75. In S75 the controller 61B reads the cartridge ID 421 from the cartridge memory 42 of each mounted used subscription cartridge 4 via the corresponding connector 101. In S75 the controller 61B also determines whether these cartridge IDs 421 are stored in the received cartridge ID information 627 of the main memory 62.

When the controller 61B determines that the cartridge IDs 421 are stored in the received cartridge ID information 627 of the main memory 62 (S75: YES), the controller 61B executes the process from S71 described above. As a result, the user can use the subscription cartridges 4 previously used on the old printer 1A for printing on the new printer 1B.

However, when the controller 61B determines that the cartridge IDs 421 are not stored in the main memory 62 as the received cartridge ID information 627 (S75: NO), the controller 61B infers that the mounted subscription cartridges 4 have not been used on the old printer 1A and advances to S76. In S76 the controller 61B reads the print permission flag from the main memory 62, sets this print permission flag to OFF, and re-stores the print permission flag in the main memory 62. Subsequently, the controller 61B ends the process in FIG. 9. Thus, by setting the print permission flag to OFF in S76, the new printer 1B is placed in a non-print-ready state.

In the image formation system 100 according to the embodiment described above, the controller 61B of the new printer 1B can store cartridge IDs for subscription cartridges 4 previously used on an old printer 1A as the received cartridge ID information 627. As a result, when cartridge IDs for mounted subscription cartridges 4 are stored in the cartridge information 621 or received cartridge ID information 627, the controller 61B can initially introduce ink into the recording head 32, enabling the new printer 1B to perform printing operations. Therefore, subscription cartridges 4 previously used on the old printer 1A can continue to be used on the new printer 1B, even though an agreement has been concluded for the new printer 1B.

The controller 61B can store received cartridge IDs for subscription cartridges 4 previously used on the old printer 1A in the received cartridge ID information 627, provided that a write permission notification permitting the writing of cartridge IDs has been received from the server 8 via the communication unit 63. Furthermore, after storing cartridge IDs for subscription cartridges 4 previously used on the old printer 1A in the received cartridge ID information 627, the controller 61B sets the write permission flag to OFF. As a result, the controller 61B can avoid incorrectly storing cartridge IDs for unintended subscription cartridges 4 as received cartridge ID information 627.

In the image formation system 100 according to the embodiment described above, the controller 61A of the old printer 1A sets the copy permission flag to OFF after transmitting the cartridge IDs for the ink cartridges 4 to the server 8. As a result, the controller 61A can prevent the cartridge IDs stored in the main memory 61 from being changed or leaked to other devices, thereby limiting devices that can use the ink cartridges 4 currently used on the old printer 1A.

### [Variations of the Embodiment]

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents. Some specific examples of potential alternatives, modifications, or variations in the described invention are provided below:

### < First Variation >

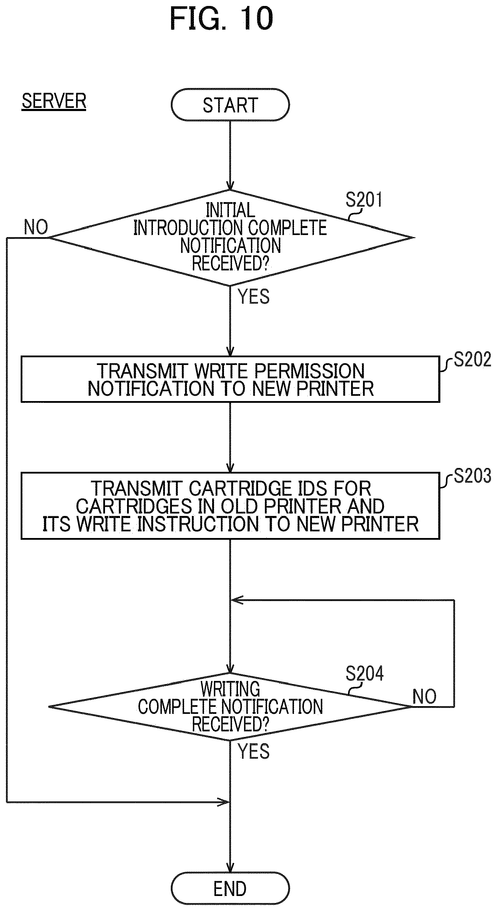

For example, the server control unit 81 need not execute the process in S26 through S28 of FIG. 6. In other words, after registering information on the new subscribed machine in S25, in S29 the server control unit 81 may notify the provider's terminal at the factory via the server communication unit 83 that registration of the new printer 1B as a subscribed machine is complete, and subsequently end the process. Thereafter, the server control unit 81 may execute the process illustrated in the flowchart of FIG. 10. The program implementing the process in FIG. 10 is stored in the server memory 82 of the server 8.

Note that the service provider receives the registration complete notification from the server 8 via the provider's terminal indicating that registration of the new printer 1B as a subscribed machine is complete. At the factory, the service provider may ship new subscription cartridges 4 together with the new printer 1B to the user after configuring the above user information in the new printer 1B.

Specifically, in S201 of FIG. 10, the server control unit 81 determines whether an initial introduction complete notification has been received from the new printer 1B via the server communication unit 83 indicating that the initial introduction of ink into the recording head 32 has been completed. When the server control unit 81 determines that an initial introduction complete notification has not been received from the new printer 1B (S201: NO), the server control unit 81 ends the process in FIG. 10.

On the other hand, when the server control unit 81 has received an initial introduction complete notification from the new printer 1B via the server communication unit 83 (S201: YES), in S202 the server control unit 81 transmits a write permission notification to the new printer 1B via the server communication unit 83 permitting writing of cartridge IDs. In S203 the server control unit 81 transmits the cartridge IDs for the ink cartridges 4 in the old printer 1A to the new printer 1B via the server communication unit 83. In S203 the server control unit 81 also transmits a write instruction to the new printer 1B via the server communication unit 83 instructing the new printer 1B to store the transmitted cartridge IDs in the main memory 62 as the received cartridge ID information 627.

In S204 the server control unit 81 continues to wait while a writing complete notification has not been received from the new printer 1B via the server communication unit 83 (S204: NO). When the server control unit 81 receives a writing complete notification from the new printer 1B indicating that the cartridge IDs for the ink cartridges 4 have been stored as the received cartridge ID information 627 (S204: YES), the server control unit 81 ends the process in FIG. 10.

Therefore, ink is not initially introduced into the recording head 32 until the user has mounted the new subscription cartridges 4 into the new printer 1B, and thus the new printer 1B is not set to a print-ready state. This allows the user, when ink has not been initially introduced into the recording head 32, to mount the new subscription cartridges 4 sent together with the new printer 1B without hesitation even if the subscription cartridges 4 that have been used on the old printer 1A are still available to the user.

Note that a message may be displayed on the display 64 explaining that the new subscription cartridges 4 sent together with the new printer 1B are to be mounted in the new printer 1B in order to initially introduce ink into the recording head 32. An operating manual in which this message is printed may also be packaged with the new printer 1B.

### < Second Variation >

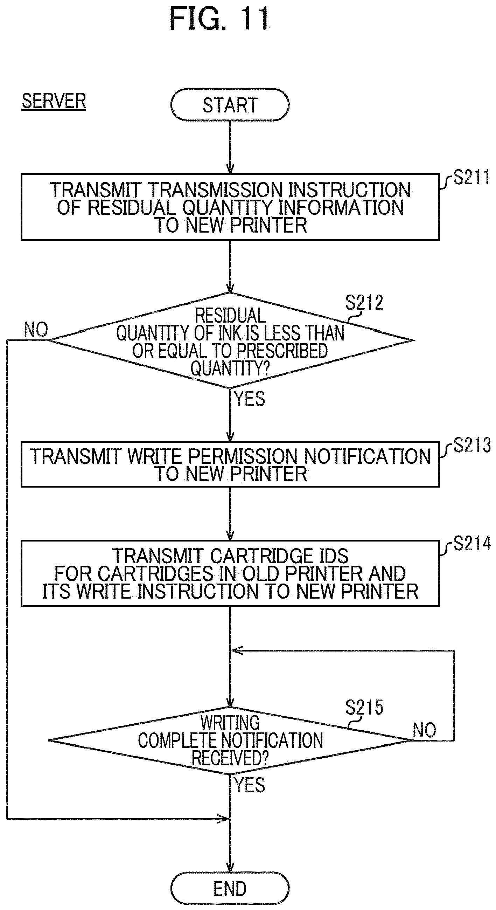

For example, the server control unit 81 need not execute the process in S26 through S28 of FIG. 6. In other words, after registering information on the new subscribed machine in S25, in S29 the server control unit 81 may notify the provider's terminal at the factory via the server communication unit 83 that registration of the new printer 1B as a subscribed machine is complete, and subsequently end the process. Thereafter, the server control unit 81 may execute the process illustrated in the flowchart of FIG. 11. The program implementing the process in FIG. 11 is stored in the server memory 82 of the server 8.

Note that the service provider receives the registration complete notification from the server 8 via the provider's terminal indicating that registration of the new printer 1B as a subscribed machine is complete. At the factory, the service provider may ship new subscription cartridges 4 together with the new printer 1B to the user after configuring the above user information in the new printer 1B.

Specifically, in S211 of FIG. 11 the server control unit 81 sends a transmission instruction to the new printer 1B via the server communication unit 83 instructing the new printer 1B to transmit the residual ink quantity information on the subscription cartridges 4 being used on the new printer 1B. The server control unit 81 sends the transmission instruction in S211 at a predetermined timing after the service provider ships the new printer 1B in which the user information is configured, for example. In S212 the server control unit 81 determines whether the residual quantity of ink indicated by the residual ink quantity information on each of the subscription cartridges 4 received from the new printer 1B via the server communication unit 83 is less than or equal to a prescribed quantity. For example, the server control unit 81 determines whether the received residual ink quantity information on each subscription cartridge 4 indicates "EMPTY" or "5% or less" or the like.

When the server control unit 81 determines that the residual ink quantity information on each subscription cartridges 4 received via the server communication unit 83 indicates that the residual quantity of ink greater than the prescribed quantity (S212: NO), the server control unit 81 ends the process in FIG. 11.

However, when the server control unit 81 determines that the residual ink quantity information on each subscription cartridge 4 indicates the residual quantity of ink less than or equal to the prescribed quantity (S21: YES), in S213 the server control unit 81 transmits a write permission notification to the new printer 1B via the server communication unit 83 permitting writing of the cartridge IDs. In S214 the server control unit 81 then transmits the cartridge IDs for the ink cartridges 4 in the old printer 1A to the new printer 1B via the server communication unit 83. In S214 the server control unit 81 also transmits a write instruction to the new printer 1B via the server communication unit 83 instructing the new printer 1B to store the transmitted cartridge IDs in the main memory 62 as the received cartridge ID information 627.

In S215 the server control unit 81 continues to wait while a writing complete notification has not been received from the new printer 1B via the server communication unit 83 (S215: NO). When the server control unit 81 receives a writing complete notification from the new printer 1B indicating that the cartridge IDs for the ink cartridges 4 have been stored as the received cartridge ID information 627 (S215: YES), the server control unit 81 ends the process in FIG. 11.

Therefore, ink is not initially introduced into the recording head 32 until the user has mounted the new subscription cartridges 4 into the new printer 1B, and thus the new printer 1B is not set to a print-ready state. This allows the user, when ink has not been initially introduced into the recording head 32, to mount the new subscription cartridges 4 sent together with the new printer 1B without hesitation even if the subscription cartridges 4 that have been used on the old printer 1A are still available to the user. This also allows the user to use the subscription cartridges 4 that had been previously used on the old printer 1A only after ensuring that the new subscription cartridges 4 mounted in the new printer 1B have been used until the ink stored therein has dropped to the prescribed quantity or less.

Note that a message may also be displayed on the display 64 explaining that the new subscription cartridges 4 sent together with the new printer 1B are to be mounted in the new printer 1B in order to initially introduce ink into the recording head 32. An operating manual in which this message is printed may also be packaged with the new printer 1B.

### < Third Variation >

For example, the server control unit 81 may execute the process in S19 through S22 of FIG. 6 even after determining in S15 that the residual ink quantity in each ink cartridge 4 is less than the quantity of ink required for the initial introduction of ink (S15: NO). After completing the process in S19 through S22, the server control unit 81 may then execute the process from S16. Thereafter, the server control unit 81 may execute the process in S201 through S204 of FIG. 10.

Note that the service provider receives the registration complete notification indicating that registration is complete from the server 8 via the provider's terminal. At the factory, the service provider may configure the above user information in the new printer 1B and subsequently ship new subscription cartridges 4 together with the new printer 1B to the user.

Therefore, ink is not initially introduced into the recording head 32 until the user has mounted the new subscription cartridges 4 into the new printer 1B, and thus the new printer 1B is not placed in a print-ready state. This allows the user, when ink has not been initially introduced into the recording head 32, to mount the new subscription cartridges 4 sent together with the new printer 1B without hesitation even if the subscription cartridges 4 that have been used on the old printer 1A are still available to the user.

After the initial introduction of ink into the recording head 32 of the new printer 1B has been completed, the user can mount and use the ink cartridges 4 from the old printer 1A in the new printer 1B. This allows the user to use all remaining ink in the ink cartridges 4 used in the old printer 1A in the new printer 1B.

Note that a message may also be displayed on the display 64 explaining that the new subscription cartridges 4 sent together with the new printer 1B are to be mounted in the new printer 1B in order to initially introduce ink into the recording head 32. An operating manual in which this message is printed may also be packaged with the new printer 1B.

### < Fourth Variation >

In S22 of FIG. 6, the server control unit 81 stores the cartridge IDs for the ink cartridges 4 received from the old printer 1A via the server communication unit 83 in the server memory 82. Here, before advancing to S23, the server control unit 81 may transmit a copying prohibited instruction to the old printer 1A via the server communication unit 83 instructing the old printer 1A to set the copy permission flag to OFF.

In the meantime, the controller 61A of the old printer 1A may wait in S54 of FIG. 8 until a copying prohibited instruction is received from the server 8. After receiving a copying prohibited instruction via the communication unit 63, the controller 61A reads the copy permission flag from the main memory 62, sets this copy permission flag to OFF, and re-stores the copy permission flag in the main memory 62. Subsequently, the controller 61A may advance to S55.

This enables the server control unit 81 to set the old printer 1A to a copying prohibited state after ensuring that the cartridge IDs for the subscription cartridges 4 that have been used on the old printer 1A have been received.

### < Fifth Variation >

In S29 of FIG. 6, the server control unit 81 transmits a registration complete notification to the provider's terminal at the factory via the server communication unit 83 indicating that registration of the new printer 1B as a subscribed machine is complete. The server control unit 81 also sends a writing complete notification to the provider's terminal indicating that the new printer 1B has stored the cartridge IDs as the received cartridge ID information 627.

The server control unit 81 may also end the process in FIG. 6 after sending a writing prohibited instruction to the new printer 1B instructing the new printer 1B to set the write permission flag to OFF, for example.

In the meantime, the controller 61B of the new printer 1B waits in S67 of FIG. 9 until a writing prohibited instruction is received from the server 8. After receiving a writing prohibited instruction via the communication unit 63, the controller 61A may read the write permission flag from the main memory 62, set this write permission flag to OFF, and re-store the write permission flag in the main memory 62 before advancing to S68.

This enables the server control unit 81 to set the new printer 1B to a writing prohibited state after ensuring that the cartridge IDs for subscription cartridges 4 that have been used on the old printer 1A have been stored in the main memory 62 of the new printer 1B as the received cartridge ID information 627.

### < Sixth Variation >

For example, the controller 61B of the new printer 1B may execute the process in S68 through S79 of FIG. 9 for the mounted subscription cartridge 4 of each color, individually. This enables the user to use new ink cartridges 4 in combination with used ink cartridges 4.

### < Seventh Variation >

The present invention is not limited to the image-forming device 1 described in the embodiment but may be applied to any electronic device in which replaceable cartridge-type consumables are mounted. For example, the invention may be applied to replaceable batteries installed in vehicles, filters in water purifiers, and cartridges in electronic cigarettes.

### < Eighth Variation >

The following is a variation of the process executed in S123 and S102 of FIG. 5. The server control unit 81 may transmit a display instruction to the old printer 1A via the server communication unit 83 instructing the old printer 1A to display a message on the display 64 inquiring whether the user will continue using the ink cartridges 4 on the new printer 1B. Upon receiving this display instruction, the controller 61A of the old printer 1A may display the message on the display 64 inquiring whether the user will continue using the ink cartridges 4 on the new printer 1B.

Next, the server control unit 81 may confirm whether the user will continue to use the ink cartridges 4 on the new printer 1B in response to the inquiry displayed on the display 64 (corresponds to S123). The server control unit 81 confirms the user's desire to continue using the ink cartridges 4 on the basis of instructions inputted by the user via the operating unit 65 of the old printer 1A. The operating unit 65 may have a touchscreen integrally configured with the display 64.

The user may input an instruction indicating whether the user will continue using the ink cartridges 4 on the new printer 1B by pressing a Continue Use button displayed on the display 64 using the operating unit 65 or the touchscreen. When the user inputs an indication to continue using the ink cartridges 4, the controller 61A may notify the server 8 via the communication unit 63 that the ink cartridges 4 will continue to be used on the new printer 1B (corresponds to S102).

This enables the old printer 1A to transmit the cartridge IDs of the ink cartridges 4 used thereon to the server 8 after obtaining the approval of the user of the old printer 1A. Thus, the ink cartridges 4 used on the old printer 1A can continue to be used on the new printer 1B with the approval of the user of the old printer 1A.

### < Ninth Variation >

When the controller 61A determines in S41 of FIG. 8 that a failure has not occurred in the old printer 1A (S41: NO) or after executing the process in S42, the controller 61A may execute the following process in S43 through S45 (not illustrated). Thereafter, the controller 61 may proceed to S46.

Specifically, in S43 the controller 61A determines whether a display instruction has been received from the server 8 via the communication unit 63 to display a confirmation screen inquiring whether the user will continue using the ink cartridges 4 on the new printer 1B (hereinafter the displayed screen will be called a "confirmation screen for continued use").

When the controller 61A determines that a display instruction to display a confirmation screen for continued use has not been received (S43: NO), the controller 61A may advance to S46. However, when the controller 61A determines that a display instruction to display the confirmation screen for continued use has been received (S43: YES), the controller 61A advances to S44.

In S44 the controller 61A displays the confirmation screen for continued use on the display 64. For example, the controller 61A displays a "YES" button for indicating that the user will continue using the ink cartridges 4 next to a "NO" button for indicating that the user will not continue using the ink cartridges 4.

The controller 61A detects user input via the operating unit 65 (e.g., the touchscreen) in response to the inquiry on whether the ink cartridges 4 will continue to be used on the new printer 1B. In S45 the controller 61A notifies the server 8 via the communication unit 63 of the user input and subsequently advances to S46.

For example, the controller 61A notifies the server 8 via the communication unit 63 that the ink cartridges 4 will continue to be used on the new printer 1B when the user pressed the "YES" button displayed on the screen and notifies the server 8 that the ink cartridges 4 will not continue to be used on the new printer 1B when the user pressed the "NO" button displayed on the screen. Subsequently, the controller 61A advances to S46.

This enables the controller 61A to transmit the cartridge IDs of the ink cartridges 4 used on the old printer 1A to the server 8 after obtaining the approval of the user of the old printer 1A. Thus, the ink cartridges 4 used on the old printer 1A can continue to be used on the new printer 1B with the approval of the user of the old printer 1A.

### < Tenth Variation >

The image-forming device 1 may be any device that is provided with a communication function, and a function for performing printing operations using consumables, such as ink cartridges or toner cartridges. For example, the image-forming device 1 may be an inkjet printer or a laser printer. Alternatively, the image-forming device 1 may be a multifunction printer (MFP) provided with a combination of other functions, such as a scanner or a facsimile function.

When the image-forming device 1 is a laser printer, a drum cartridge and a toner cartridge are mounted in the image-forming device 1 instead of the ink cartridges 4. Note that there is no particular restriction on the numbers of drum cartridges and toner cartridges mounted in the image-forming device 1 and no particular restriction on the structures of the drum cartridges and toner cartridges.

For example, the drum cartridge and toner cartridge may be provided as independent cartridges. The drum cartridge and toner cartridge may be integrally configured by mounting the toner cartridge in the drum cartridge. While the toner cartridge is mounted in the drum cartridge, the toner cartridge is mounted together with the drum cartridge into the main casing of the image-forming device 1.

When the drum cartridge and toner cartridge are independent cartridges, the structures of the drum cartridge and toner cartridge may be one of the following three types.

As an example of the first structure, the drum cartridge is provided with a cartridge case. A photosensitive drum, a drum memory, and a developing roller may be provided in the cartridge case. The toner cartridge may be provided with a cartridge case, and a toner memory may be provided in the cartridge case. The cartridge case of the toner cartridge accommodates toner therein. The outer circumferential surface of the developing roller contacts the outer circumferential surface of the photosensitive drum inside the drum cartridge, whereby the surface of the photosensitive drum is coated with developer (i.e., toner). An image based on data specified in a print job is printed on paper by transferring the toner coated on the photosensitive drum to the paper with a transfer belt.

As an example of the second structure, the cartridge case of the drum cartridge may be provided with the photosensitive drum and drum memory. A developing roller may be provided in the cartridge case of the toner cartridge. The outer circumferential surface of the developing roller contacts the outer circumferential surface of the photosensitive drum inside the drum cartridge.

As an example of the third structure, a developing cartridge having a developing roller may be mounted in the image-forming device 1 separate from the drum cartridge and toner cartridge. In this case, the drum cartridge has a cartridge case, a photosensitive drum, and a drum memory. The toner cartridge has a cartridge case and a toner memory. The cartridge case of the toner cartridge accommodates toner therein. In the example of the third structure, the three parts including the drum cartridge, toner cartridge, and developing cartridge are mounted in the main casing.

The drum memory stores a drum ID, drum type information, and drum life information, for example. The drum ID is a serial number that identifies the drum cartridge, while the drum life information is information on the remaining life of the photosensitive drum. The drum type information specifies whether the drum cartridge is a subscription drum cartridge or a normal drum cartridge.

The toner memory stores a toner ID, toner type information, and toner life information, for example. The toner ID is a serial number that identifies the toner cartridge, while the toner life information is information on the remaining quantity of toner. The toner type information specifies whether the toner cartridge is a subscription toner cartridge or a normal toner cartridge.

When the image-forming device 1 is a laser printer, the main memory 62 stores drum information and toner information rather than ink information. The drum information is information associating a drum ID, drum type information, and drum life information read from the drum memory of each drum cartridge with one another. The toner information is information associating a toner ID, toner type information, and toner life information read from the toner memory of each toner cartridge with one another.

Hence, the drum cartridge and toner cartridge may be integrally configured as an integrated cartridge. The integrated cartridge has a cartridge case, a photosensitive drum, memory, and a developing roller. The outer circumferential surface of the developing roller contacts the outer circumferential surface of the photosensitive drum inside the integrated cartridge. The cartridge case of the integrated cartridge accommodates toner therein. The memory in the integrated cartridge stores the various information stored in the drum memory and toner memory described above.

The process steps illustrated in the flowcharts referenced in the embodiment described above are still applicable to the image-forming device 1 when the image-forming device 1 is a laser printer. Specifically, the subscription cartridges described in the above embodiment may be modified from ink cartridges 4 to drum cartridges and toner cartridges (or integrated cartridges) when the image-forming device 1 is a laser printer.

Note that drum life information and toner life information are stored in the fourth area of the cartridge memory 42 in the integrated cartridge in place of the residual ink quantity information 423 when the image-forming device 1 is a laser printer. When the drum cartridge and toner cartridge are not integrated, the drum life information is stored in the fourth area of the cartridge memory 42 in the drum cartridge and the toner life information is stored in the fourth area of the cartridge memory 42 in the toner cartridge.

The image-forming device 1 according to the tenth variation obtains the same effects as the image-forming device 1 according to the embodiment described above.

### < Implementation through Software >

The control block for the image-forming device 1 and the server 8 may be implemented by logic circuits (hardware) formed on an integrated circuit (a chip) or the like or may be implemented through software.

In the latter case, the image-forming device 1 and server 8 are provided with a computer to execute a program, specifically a set of computer-readable instructions, which is software for implementing each function. This computer is provided with one or more processors, and a computer-readable storage medium for storing the set of computer-readable instructions described above, for example. In this computer, the processor reads the set of computer-readable instructions from the storage medium and executes the set of computer-readable instructions to attain the objects of the present disclosure.

A central processing unit (CPU) may be used as the processor, for example. The storage medium may be a "non-transitory, tangible medium," such as ROM, a tape, a disc, a card, semiconductor memory, or a programmable logic circuit. Random-access memory (RAM) may also be provided for developing the program. The program may also be supplied to the computer described above via any transmission medium (a communication network, broadcast waves, etc.) capable of transmitting the program. Note that one aspect of this specification is that the program can be implemented in the form of data signals embedded in a carrier wave, as embodied in electronic transmission.

## Claims

1. An electronic device comprising:
an accommodating portion in which a consumable is mountable, the consumable having a consumable memory storing identification information for identifying the consumable;
a main memory;
a communication interface; and
a controller configured to perform:
in response to a consumable being mounted into the accommodating portion, an acquisition process to acquire identification information from a consumable memory of the mounted consumable currently mounted in the accommodating portion; and
after performing the acquisition process, when an agreement has been concluded for the electronic device and the mounted consumable currently mounted in the accommodating portion satisfies a prescribed condition:
a first storage process to store the acquired identification information acquired in the acquisition process in the main memory as first identification information; and
a permission process to permit a consumption process to perform a prescribed operation while consuming the mounted consumable,
wherein the controller is configured to further perform:
a reception process to receive identification information of a consumable that has been mounted in another electronic device via the communication interface; and
a second storage process to store the received identification information received in the reception process in the main memory as second identification information, and
wherein after performing the acquisition process, when an agreement has been concluded for the electronic device, the mounted consumable currently mounted in the accommodating portion does not satisfy the prescribed condition, and the acquired identification information acquired in the acquisition process matches one of the first identification information and the second identification information stored in the main memory, the controller performs the permission process.

2. The electronic device according to claim 1,
wherein the controller is configured to further perform:
after performing the reception process, a first determination process to determine whether a write permission has been received via the communication interface, the write permission permitting storing of the received identification information received in the reception process in the main memory, and
wherein when the controller determines in the first determination process that the write permission has been received, the controller performs the second storage process, whereas when the controller determines in the first determination process that the write permission has not been received, the controller skips the second storage process.

3. The electronic device according to claim 1,
wherein the controller is configured to further perform:
after performing the acquisition process, when the mounted consumable currently mounted in the accommodating portion satisfies the prescribed condition, a preparatory process to prepare for performing the consumption process, and
wherein after performing the acquisition process, when the mounted consumable currently mounted in the accommodation portion does not satisfy the prescribed condition, the controller skips the preparatory process.

4. The electronic device according to claim 3,
wherein the consumable includes a cartridge storing liquid therein,
wherein the electronic device further comprises:
a liquid ejection head having a nozzle configured to eject the liquid stored in the cartridge, and
wherein the preparatory process includes an initial introduction process to fill the liquid ejection head with the liquid in the cartridge.

5. An electronic device comprising:
an accommodating portion in which a consumable is mountable, the consumable having a consumable memory storing identification information for identifying the consumable;
a main memory;
a communication interface; and
a controller configured to perform:
in response to a consumable being mounted into the accommodating portion, an acquisition process to acquire identification information from a consumable memory of the mounted consumable currently mounted in the accommodating portion; and
after performing the acquisition process, when an agreement has been concluded for the electronic device and the mounted consumable currently mounted in the accommodating portion satisfies a prescribed condition, a storage process to store the acquired identification information acquired in the acquisition process in the main memory,
wherein the controller is configured to further perform:
a first determination process to determine whether a request to use the mounted consumable in another electronic device has been received via the communication interface; and
in response to determining in the first determination process that the request has been received, a transmission process to transmit the identification information stored in the main memory to an external device.

6. The electronic device according to claim 5, further comprising:
a display; and
a user interface,
wherein the controller is configured to further perform:
in response to determining in the first determination process that the request has been received, a display process to display on the display an inquiry screen inquiring whether to respond to the request; and
a second determination process to determine whether an instruction to respond to the request has been received via the user interface, and
wherein when the controller determines in the second determination process that the instruction has been received, the controller performs the transmission process.

7. The electronic device according to claim 5 or 6,
wherein the controller is configured to further perform:
a third determination process to determine whether the transmission process has been performed; and
in response to determining in the third determination process that the transmission process has been performed, a setting process to set the main memory to prohibit writing and reading of the identification information of the consumable.

8. A program for controlling a server, the server including: a server-side communication interface; and a computer, the server being communicable with a first electronic device and a second electronic device via the server-side communication interface, each of the first electronic device and the second electronic device being configured to perform a prescribed operation while consuming a consumable under an agreement concluded for the each of the first electronic device and the second electronic device, the consumable satisfying a prescribed condition and having a consumable memory storing identification information for identifying the consumable, the first electronic device including a first main memory, the second electronic device including a second main memory, the program, when executed by the computer, causing the server to perform:
(a) acquiring identification information of a mounted consumable from the first main memory via the server-side communication interface, the mounted consumable being a consumable currently mounted in the first electronic device; and
(b) transmitting notification information to the second electronic device via the server-side communication interface, the notification information notifying the second electronic device of the acquired identification information acquired in (a) as identification information of an available consumable that can be consumed in the second electronic device.

9. The program according to claim 8,
wherein the notification information includes instruction information instructing the second electronic device to store the acquired identification information acquired in (a) in the second main memory as the identification information of the available consumable.

10. The program according to claim 8 or 9,
wherein the server is communicable with a user terminal via the server-side communication interface, the user terminal being used by a user of the first electronic device,
wherein the program, when executed by the computer, causes the server to further perform:
prior to performing the acquiring in (a):
(c) transmitting inquiry information to one of the first electronic device and the user terminal via the server-side communication interface, the inquiry information inquiring whether the mounted consumable currently mounted in the first electronic device is to be used in the second electronic device; and
(d) determining whether response information to the inquiry information transmitted in (c) has been received via the server-side communication interface, the response information indicating that the mounted consumable is to be used in the second electronic device, and
wherein the acquiring in (a) is performed when the determining in (d) determines that the response information has been received.

11. The program according to claim 8 or 9,
wherein the consumable memory of the consumable is configured to store residual quantity information indicating residual quantity of the consumable,
wherein the program, when executed by the computer, causes the server to further perform:
prior to performing the acquiring in (a):
(e) acquiring residual quantity information of the mounted consumable currently mounted in the first electronic device from the first electronic device via the server-side communication interface; and
(f) determining whether the residual quantity indicated by the acquired residual quantity information acquired in (e) is greater than or equal to a threshold, and
wherein the acquiring in (a) is performed when the determining in (f) determines that the residual quantity is greater than or equal to the threshold.

12. The program according to claim 11,
wherein the second electronic device further includes:
an accommodating portion in which the consumable is mountable;
a device-side communication interface, the second electronic device being communicable with the server via the device-side communication interface; and
a controller,
wherein the controller of the second electronic device is configured to perform:
when the mounted consumable currently mounted in the accommodating portion satisfies the prescribed condition, a preparatory process to prepare for performing a consumption process to perform the prescribed operation while consuming the mounted consumable; and
when the preparatory process is completed, a transmission process to transmit a preparation complete notification to the server via the device-side communication interface, the preparation complete notification indicating the preparatory process has been completed,
wherein the program, when executed by the computer, causes the server to further perform:
in response to determining in (f) that the residual quantity is less than the threshold, (g) determining whether the preparation complete notification has been received from the second electronic device via the server-side communication interface, and
wherein the transmitting in (b) is performed after the determining in (g) determines that the preparation complete notification has been received.

13. The program according to claim 8 or 9,
wherein the program, when executed by the computer, causes the server to further perform:
prior to performing the acquiring in (a):
(h) acquiring a status of the second electronic device via the server-side communication interface; and
(i) determining whether the acquired status of the second electronic device acquired in (h) is a prescribed status, and
wherein the acquiring in (a) is performed when the determining in (i) determines that the acquired status of the second electronic device is the prescribed status.

14. The program according to claim 13,
wherein the second electronic device includes an accommodating portion in which the consumable is mountable, and
wherein the prescribed status includes a status in which a preparatory process to prepare for performing a consumption process to perform the prescribed operation while consuming the mounted consumable currently mounted in the accommodating portion has been completed.

15. The program according to claim 13,
wherein the consumable memory of the consumable is configured to store residual quantity information indicating residual quantity of the consumable,
wherein the second electronic device further includes: an accommodating portion in which the consumable is mountable, and
wherein the prescribed status includes a status in which the residual quantity of the mounted consumable currently mounted in the accommodating portion and satisfying the prescribed condition is less than or equal to a prescribed quantity.

16. The program according to claim 8 or 9,
wherein the consumable memory of the consumable is configured to store residual quantity information indicating residual quantity of the consumable,
wherein the second electronic device further includes:
an accommodating portion in which the consumable is mountable;
a device-side communication interface, the second electronic device being communicable with the server via the device-side communication interface; and
a controller,
wherein the controller of the second electronic device is configured to perform:
when the mounted consumable currently mounted in the accommodating portion satisfies the prescribed condition, a preparatory process to prepare for performing a consumption process to perform the prescribed operation while consuming the mounted consumable; and
at a predetermined timing after the preparatory process is completed, a transmission process to transmit a residual quantity notification to the server via the device-side communication interface, the residual quantity information indicating residual quantity of the mounted consumable currently mounted in the accommodating portion,
wherein the program, when executed by the computer, causes the server to further perform:
prior to performing the transmitting in (b), (j) determining whether the residual quantity notification is received from the second electronic device via the server-side communication interface, and
wherein the transmitting in (b) is performed after the determining in (j) determines that the residual quantity notification is received from the second electronic device.
